(19) Europäisches Patentamt
European Patent Office
Office européen des brevets

(11) **EP 4 414 882 A1**

(12) **EUROPEAN PATENT APPLICATION**

(43) Date of publication:
**14.08.2024 Bulletin 2024/33**

(21) Application number: **23305186.1**

(22) Date of filing: **10.02.2023**

(51) International Patent Classification (IPC):
***G06F 30/17*** (2020.01)      ***G06F 30/27*** (2020.01)
***G06F 111/06*** (2020.01)

(52) Cooperative Patent Classification (CPC):
**G06F 30/17; G06F 30/23; G06F 30/27;**
G06F 2111/06; G06F 2119/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Dassault Systèmes**
**78140 Vélizy-Villacoublay (FR)**

(72) Inventors:
• **COCHEVELOU, François**
**Vélizy-Villacoublay (FR)**
• **BONNER, David**
**Vélizy-Villacoublay (FR)**
• **SCHMIDT, Martin-Pierre Hugo**
**Vélizy-Villacoublay (FR)**

(74) Representative: **Bandpay & Greuter**
**11 rue Christophe Colomb**
**75008 Paris (FR)**

(54) **GRADIENT-BASED OPTIMIZATION FOR ROBOT DESIGN**

(57)    The disclosure notably relates to a computer-implemented method for designing a 3D robot body model representing a robot body formed in one or more materials. The method comprises providing an objective function based on predetermined parameters quantifying a motion metric of the robot. The predetermined parameters include a plurality of voxels forming a gridding of a 3D space, one or more parameters related to the one or more materials, and an actuation function which represents an actuation signal. The design variables include a distribution of density values over the plurality of voxels, and a distribution of actuation coefficients over the plurality voxels. The method further comprises exploring the design variables so as to perform a gradient-based optimization of the objective function, thereby obtaining an optimal continuous value of the design variables; and determining a 3D robot body model based on the optimal continuous value of the design variables.

FIG. 6

## Description

### TECHNICAL FIELD

The disclosure relates to the field of computer programs and systems, and more specifically to a method, system and program for designing a 3D robot body model.

### BACKGROUND

A number of solutions, hardware and software, are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for analyzing and simulating the physical behavior of a future product. CAM is an acronym for Computer-Aided Manufacturing, e.g. it relates to software solutions for defining product manufacturing processes and resources. In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production and service.

Existing solutions offer tools for designing robots having a robot body comprising one or more deformable portions each made of a deformable material. Such robots which are often called "soft robots" offer a wide array of advantages, such as avoiding damage of pieces with which their deformable portions may collide. Such robots are thus used in the food industry in particular, but not exclusively, and their use across different industries is spreading.

Cheney et al., "Unshackling evolution: evolving soft robots with multiple materials and powerful generative encoding", GECCO 2013, discloses evolving soft robots with multiple materials and a powerful generative encoding called a compositional pattern-producing network (CPPN). The document teaches that CPPNs evolve faster robots than a direct encoding and that the CPPN morphologies appear more natural. The document also teaches that locomotion performance increases as more materials are added, that diversity of form and behavior can be increased with different cost functions without stifling performance, and that organisms can be evolved at different levels of resolution.

Within this context, there is still a need for an improved solution for designing a 3D robot body model.

### SUMMARY

It is therefore provided a computer-implemented method for designing a 3D robot body model. The 3D robot body model represents a robot body formed in one or more materials, the robot body having one or more deformable portions each made of a deformable material, at least part of the one or more deformable portions being configured to be actuated. The method comprises providing an objective function based on predetermined parameters, the objective function being a continuous function of design variables. The objective function quantifies a motion metric of the robot. An optimal value of the objective function corresponds to an optimal performance of the robot with respect to the motion metric. The predetermined parameters include a plurality of voxels forming a gridding of a 3D space, one or more parameters related to the one or more materials, and an actuation function which represents an actuation signal. The actuation signal actuates deformation of the deformable material over a time period. The design variables include a distribution of density values over the plurality of voxels. Each density value continuously and monotonously represents for a voxel a proportion of the voxel filled with material, between void and full. The design variables further include a distribution of actuation coefficients over the plurality voxels. Each actuation coefficient represents for a voxel a response of material inside the voxel to the actuation signal. The method further comprises exploring the design variables so as to perform a gradient-based optimization of the objective function, thereby obtaining an optimal continuous value of the design variables. The method further comprises determining a 3D robot body model based on the optimal continuous value of the design variables.

The method may comprise one or more of the following:

- the performing of a gradient-based optimization comprises an iterative process, each iteration including simulating the robot based on the predetermined variables thereby obtaining values of simulation variables over the time period, the simulating being optionally a meshless method;

- at each iteration of the gradient-based optimization, the simulating comprises a material point method (MPM), the MPM including defining a plurality of particles located with respect to the gridding formed by the plurality of voxels; assigning to each particle: a Young's modulus based on the value of the design variables, a value of mass based on the density values of one or more corresponding voxels, and a value of the actuation signal based on the actuation coefficients and the actuation function, and iterating MPM simulation steps based on the Young's modulus, the value of mass, and the value of the actuation signal assigned to the particles;

- the robot body consists of one or more deformable portions each made of a deformable material, the design variables consisting of the distribution of density values and the distribution of actuation coefficients over the plurality of voxels;

- the value of mass assigned to each particle is proportional to the density values of one or more corresponding voxels; the robot body further comprises one or more rigid portions each made of a rigid material, the design parameters further including a distribution of stiffening parameter ($\kappa$) values over the plurality of voxels, each stiffening parameter value continuously and monotonously representing for a voxel a level of stiffness of material filling the voxel, between a first level and second level stiffer than the first level;

- the performing of a gradient-based optimization comprises an iterative process, each iteration including computing a distribution of Young's modulus values over the plurality of voxels based for each voxel on the density value and on the stiffening parameter value;

- the computation of the Young's modulus value for a voxel is of the type:

$$E = (E_{max} - E_{min}) \times \rho^4 \times ((1 - \varepsilon)\kappa^{\frac{1}{4}} + \varepsilon) + E_{min},$$

where $E$ is the computed Young's modulus, $E_{max}$ is the Young's modulus of a rigid material, $E_{min}$ is a minimum Young's modulus, $E_{act}$ is the Young's modulus of the deformable material, $\rho$ is density value, $\kappa$ is a value of stiffening parameter, and $\varepsilon = \dfrac{E_{act}}{E_{max}}$ ;

- the performing of the gradient-based optimization of the objective function further comprises imposing a constraint on a volume fraction, the volume fraction being computed from a respective distribution of density values, wherein optionally the imposing of a constraint on a volume fraction is of the type, at a given voxel:

$$\rho = \hat{\rho} + \eta \times (\rho_{target} - \hat{\rho})$$

where

$$\rho_{target} = V_{frac} \times N_{voxel} \times \frac{\hat{\rho}}{\sum_{voxel} \widehat{\rho_i}}$$

wherein $\eta$ is a parameter, $V_{frac}$ is the volume fraction, $\rho$ is a constrained density value, $\hat{\rho}$ is an unconstrained density value, $\sum_{voxel} \widehat{\rho_i}$ is a summation of $\widehat{\rho_i}$ on the plurality voxels, and $N_{voxel}$ is a total number of voxels in the plurality of voxels;

- the performing of the gradient-based optimization of the objective function further comprises imposing a constraint on an actuation energy, the actuation energy being a function of the design variables, wherein optionally the imposing of the constraint on an actuation energy is of the type, at a given voxel,

$$\alpha = \hat{\alpha} + \tanh\left(\frac{\sum_{voxel}|\hat{\alpha}_i| \times \rho_i^4}{\Gamma_{frac} \times N_{voxel}}\right)(\alpha_{target} - \hat{\alpha})$$

where

$$\alpha_{target} = \Gamma_{frac} \times N_{voxel} \times \frac{\hat{\alpha}}{\sum_{voxel}|\hat{\alpha}_i| \times \rho_i^4}$$

wherein $\overset{\wedge}{\alpha}$ is a constrained actuation coefficient, $\overset{\wedge}{\alpha}$ is an unconstrained (i.e., raw) actuation coefficient, $\sum_{voxel}|\hat{\alpha}| \times \rho_i^4$ is a summation of

$|\hat{\alpha}_i| \times \rho_i^4$ on the plurality of voxels, $|\hat{\alpha}_i|$ is an absolute value of the unconstrained actuation coefficient at voxel $i$, and $\rho_i$ is a density value at voxel $i$, $\Gamma_{frac}$ is an energy fraction and $N_{voxel}$ is a total number of voxels the plurality of voxels;

- the exploring of the design variables further comprises updating the distribution of values of the design variables based on a previous value and a computed derivative; further updating the updated values of the density using the updated value of the density and the constraint on a volume fraction; and further updating the updated values of the actuation coefficient using the further updated values of the density and the constraint on an actuation energy;
- the performing of a gradient-based optimization further comprises computing partial derivatives of the objective function with respect to the design variables, the performing of a gradient-based optimization comprises: providing a plurality of time instants between an initial time and an end of the time period, thereby defining a plurality of time intervals each formed between two consequent time instants, the obtaining of values of simulation variables over the time period thereby comprises obtaining the simulation variable at the plurality of time instants; performing a forward simulation on each time interval, starting from the initial time to the one before the last, the performing of a forward simulation on the time interval being based on an initial condition and/or the forward simulation on a previous time interval; performing a forward simulation and a backward simulation on the last interval based on based on an initial condition and/or the forward simulation on a previous time interval; and performing a backward simulation on each time interval, starting from the time interval before the last to the first time interval, based on an initial condition and/or the forward simulation on a previous time interval; and/or
- the determining of the 3D robot body model based on the optimal continuous value of the design variables comprises thresholding the optimal value of one or more of the design variables over the plurality of voxels.

It is further provided a computer program comprising instructions for performing the method.

It is further provided a computer readable storage medium having recorded thereon the computer program.

It is further provided a system comprising a processor coupled to a memory, the memory having recorded thereon the computer program.

**BRIEF DESCRIPTION OF THE DRAWINGS**

Non-limiting examples will now be described in reference to the accompanying drawings, where:

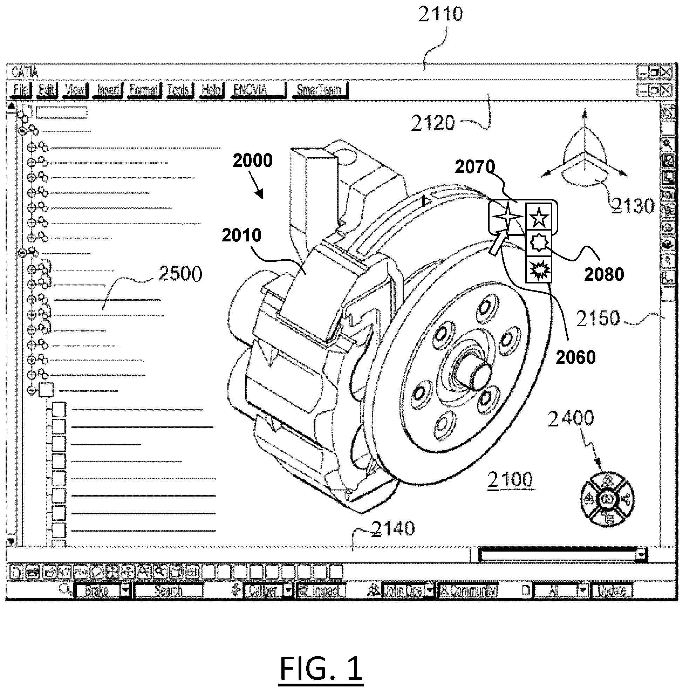

- FIG. 1 shows an example of a graphical user interface of the system.
- FIG. 2 shows an example of the system; and
- FIG.s 3 to 19 illustrate the method.

**DETAILED DESCRIPTION**

It is proposed a computer-implemented method for designing a 3D robot body model. The 3D robot body model represents a robot body formed in one or more materials. The robot body has one or more deformable portions each made of a deformable material. At least part of the one or more deformable portions is configured to be actuated. The method comprises providing an objective function based on predetermined parameters. The objective function is a continuous function of design variables. The objective function quantifies a motion metric of the robot. An optimal value of the objective function corresponds to an optimal performance of the robot with respect to the motion metric.

The predetermined parameters include a plurality of voxels forming a gridding of a 3D space. The predetermined parameters further include one or more parameters related to the one or more materials, and the predetermined parameters also include an actuation function. The actuation function represents an actuation signal which actuates deformation of the deformable material over a time period.

The design variables include a distribution of density values over the plurality of voxels. Each density value continuously and monotonously represents for a voxel a proportion of the voxel filled with material, between void and full. The design variables further include a distribution of actuation coefficients over the plurality voxels. Each actuation coefficient represents for a voxel (e.g., a phase and amplitude of) a response of material inside the voxel to the actuation signal.

The method further comprises exploring the design variables so as to perform (i.e., via performing) a gradient-based optimization of the objective function (the design variables thus being the free variables of the optimization, that is, the variables allowed to vary during the optimization, i.e., be explored). The method thereby obtains an optimal continuous value of the design variables. The method further comprises determining a 3D robot body model based on the optimal continuous value of the design variables.

Such a method constitutes an improved method for designing a 3D model of a robot body. Indeed, the method optimizes both a distribution of density values and a distribution of actuation coefficients in a gradient-based optimization approach.

On the one hand, the fact that the actuation coefficients are design variables to be optimized enables the method to optimize a response of the robot to the actuation signal. In other words, the method finds an optimal actuation behavior of the robot, i.e., an optimal space distribution of deformable portions that are to be actuated to achieve an optimal performance with respect to the motion metric. This thus constitutes a design solution in which an actuation layout of a robot (i.e., a layout of passive and active elements of the robot), in addition to a topology of the robot (i.e., based on the obtained distribution of density values) may be optimized. This improves the performance of the method, as in contrary to the known methods in the art which consider actuation, the location and shape of the active parts of the robot is not pre-defined.

On the other hand, in order to obtain the optimal value of design variable, the method performs a gradient-based optimization. This is enabled thanks to the fact that performance of the robot with respect to a metric which relates to motion of the robot can be expressed as an objective function of the design variables which is continuous, since motion behavior continuously depends on material distribution and actuation layout. Gradient-based optimization methods have better scalability in terms of number of optimization variables compared to gradient-free methods. This means that using a gradient-based optimization enables the method to obtain the optimal design variables faster in terms of computational time and/or obtaining a more complicated design of the robot body with higher number of degrees of freedom. Furthermore, using a gradient-based optimization, unlike gradient-fee global search strategies, guarantees a convergence to an optimal solution, at least in a local sense.

Each of the two aspects discussed above enables the method to obtain a design with a better compliance with design conditions (thanks to a higher degree of freedom) and to improve the performance of a robot manufactured based on said design under real conditions.

Furthermore, as discussed above, each of the density values provides a continuous and monotonous representation in a voxel of the proportion of said voxel filled with material. Each actuation coefficient may also continuously and monotonously represent, for a voxel, a response of material inside the voxel to the actuation signal. Thereby, the method employs the continuous representation(s) for different properties (e.g., the material distribution and/or the mechanical response to an actuation) of the robot body. This improves the method by providing the continuity in the behavior of the objective function with respect to the free variables of the optimization problem, thereby, enabling the method to benefit from gradient-based optimization techniques. Such a continuity further improves the method by obtaining an optimal value of the design variables which is continuous. By "being continuous" it is meant that the optimal design variables obtained by an optimization according to the method may take any value in a respective continuous range, may be also called admissibility region/range. Such a continuity in the admissibility range in particular means that the method does not limit the optimization to explore discrete values and/or a value present in a particular predefined set. Further such a continuity means that the optimization does not apply a (posterior) filtering on the obtained optimal values. This improves the design obtained by the method as the optimization is able to perform computationally faster (as there is no constraints in the optimizing to limit the values via the optimization) and to obtain a more optimal solution, i.e., a solution with a more optimal value for the objective function as the region of exploring is larger. The more optimal value may be a larger value if the optimization is a maximization and may be a smaller value if the optimization is a minimization. Thereby, the obtained design by the method complies better to the design objectives (which are represented in the optimization problem).

The method includes a step of determining a 3D robot body model based on the optimal value of the design variables. The method may thus form a process which generally manipulates modeled objects or may form at least a part of such a process. The 3D model determined by the method based on the optimal value of the design variable may be a 3D CAD model, a finite element model (FEM), a 3D mesh, a 3D point cloud, a B-rep, or any other known modeled object. A modeled object is any object defined by data stored e.g. in the database. By extension, the expression "modeled object" designates the data itself. Some examples of modeled objects are discussed herein below. As discussed above, at least some of the design variables of the method are a continuous representation of a property of the robot. The method, in the step of determining a 3D robot body model based on the optimal continuous value of the design variables may apply further processing on the obtained design variables in order to obtain a respective 3D robot body model. In examples, such processing may comprise applying a thresholding step on the (optimal) density values. By "thresholding" it is meant mapping to a discrete set of values based on a threshold value. For example, the method may determine that each voxel with a density value higher than 0.5 is a voxel filled with a respective material, and each voxel with a density value lower than 0.5 is voxel void of material. In examples, a similar step of thresholding may be applied to the optimal actuation coefficients. The method may employ the optimal actuation coefficients to provide an improved solution in designing what areas of the robot body and in which order should expand and/or contract, and what forces and displacements should be applied on the robot body. This provides a user/designer effective tool to design the actual actuators so as to produce the prescribed effect according to the obtained actuation coefficients.

Alternatively, the method may not apply the thresholding on processing on the obtained optimal continuous design variables or merely apply the thresholding partially. In such partial thresholding the method may only apply the thresholding on values smaller or larger than the threshold. For example, the method may only set the density values below 0.5 to zero but does not apply any rounding off on the density values larger than 0.5. Such examples are particularly suitable when the designed robot is to be fabricated by some modern methods of fabrication like 3D printing Such methods of fabrication are capable of controlling locally the density, thereby being able to fabricate the robot based on the optimal continuous density value, for example by with controlling the porosity. This improves the compliance of the final fabricated robot with the design objectives.

In both examples that the method applies or does not apply a thresholding on the optimal design variables, the output of the method is a voxel-wise distribution of the design variables (e.g., densities and actuation coefficients). This voxel-representation may be optionally converted into a parametric CAD model (with parametric surfaces, e.g., including B-Reps) in any known manner and it is out of the scope of the present disclosure.

The method is in particularly relevant for designing a 3D model of a robot body. By a "robot body" it is meant the substantial part of the material(s) constitutive of the robot structure. The robot body may include (active or passive) deformable portion(s) and optionally rigid portion(s). The robot body represents a morphology of the robot. In addition to the robot body, a robot may comprise one or more actuator actuators (e.g., to actuate said deformable portions). Additionally, a robot may comprise other components such as fixtures, for example connector elements used to connect different elements of the robot together (e.g., a joint). A robot body may for example account for more than 60%, or more than 80% of the total mass of the respective robot. The respective robot may itself be connected to and/or in cooperation with a bigger robot. Further to the designing of a robot body, the method may comprise designing the actuators based on the obtained optimal designed variables, e.g. according to any known method. The precise manner to design the actuators is out of the scope of the present disclosure.

By designing a manufacturing product (or a modeled object thereof), for example "a robot body" or a robot, it is meant any action or series of actions which is at least a part of a process of elaborating a modeled object of said manufacturing product. In other words, designing a modeled object designates any action or series of actions which is at least part of a process of elaborating a modeled object. Thus, the method may comprise creating the 3D modeled object (3D robot body model) from scratch. Alternatively, the method may comprise providing a 3D modeled object previously created, and then modifying the 3D modeled object. The method may form such a process or may form at least a part of the process. The method may be followed by further design steps in order to obtain a detailed design of a robot based on the obtained optimal design variables of the robot body. For example, the further design steps may obtain a type and/or a particular position for one or more actuators so as to correspond to the obtained optimal distribution of actuation coefficients. Alternatively or additionally, the further design steps may obtain a detailed geometry of the robot based on the obtained optimal distribution of density values. Such steps may further comprise determining manufacturing steps required for obtaining that geometry, for example in a machining process, a milling process, a molding process, or by additive manufacture. Yet alternatively or additionally, the further design steps may comprise one or more further step(s) of edition or optimization (e.g., regarding to a fatigue analysis) and/or conversion to and from other models (e.g., converting a designed model obtained by the method to an FEM model to be assessed by a stress/fatigue analysis software). Such further steps may be also related to fabrication requirements. Further details regarding some of such further steps are discussed hereinbelow.

The method may be also included in a manufacturing process, which may comprise, after performing the method, producing a physical product corresponding to the modeled object, i.e. a robot body represented by the designed 3D robot body model or a whole robot having such a robot body. In any case, the modeled object designed by the method may represent a manufacturing object. The modeled object may thus be a modeled solid (i.e. a modeled object that represents a solid). Because the method improves the design of the modeled object, the method also improves the manufacturing of a product and thus increases productivity of the manufacturing process.

According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system.

By CAD solution (*e.g.*, a CAD system or a CAD software), it is additionally meant any system, software or hardware, adapted at least for designing a modeled object on the basis of a graphical representation of the modeled object and/or on a structured representation thereof (*e.g.*, a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g., non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part.

In the context of CAD, a modeled object may be any object which is modeled by data allowing its, typically 3D, representation. A 3D representation allows the viewing of the part from all angles. For example, a 3D modeled object, when 3D represented, may be handled and turned around any of its axes, or around any axis in the screen on which the representation is displayed. The display of a 3D representation facilitates design (i.e., increases the speed at which designers statistically accomplish their task). This speeds up the manufacturing process in the industry, as the design of the products is part of the manufacturing process.

The modeled object may be a manufacturing product, *i.e.*, a product to be manufactured. The modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such a part of a general mechanical part, an electro-mechanical or electronic part (including, e.g., security and/or control and/or instrumentation products, computing and communication equipment, semiconductors, medical devices and equipment), a packaging mechanism (including e.g. food and beverage and tobacco, beauty and personal care, household product packaging).

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA®. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA®. CAE may be used to ensure that various structural requirements (such as, but not limited to, mass, stiffness, strength, durability) are achieved by a new CAD model. Some of these requirements may be called Key Performance Indicators (KPIs). For many industrial products (for example cars, airplanes, consumer packaged goods, hi-tech), these KPIs are in conflict *e.g.* lower mass usually causes lower stiffness. Thus, optimization methods are often applied to find the best trade-off between the KPIs.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA®.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:

- checking the correct behavior of the object to be manufactured in a specific environment; and
- ensuring the manufacturability of the object to be manufactured.

As discussed above, the modeled object designed by the method is determined from a voxel distribution of the design variables, i.e., the optimal distribution of the density values and actuation coefficients, or in addition the stiffening parameter. Such a voxel representation of the density values, i.e., the presence or absence of material, forms a discrete geometrical representation of a manufacturing product. The discrete geometrical representation is a data structure which comprises a discrete set of pieces of data. Each piece of data may specify an element of the product, and be referred to as a discrete element.

The discrete geometrical representation may in examples comprise a number of such pieces of data higher than 100, 1000, or 10000. Each piece of data may represent a respective geometrical entity positioned in a 3D space such that the pieces of data form a solid representation of the product. The aggregation (i.e., union or juxtaposition) of the geometrical entities represents altogether the 3D object as a solid/volume. The method may comprise a step of obtaining a 3D discrete geometrical representation using the obtained optimal value of the design variables. Specifically, the method may use the obtained optimal distribution of density values in order to reconstruct a solid representation of the robot body (e.g., by obtaining a B-Rep).

The method may be included in a production process, which may comprise, after performing the method, producing a physical product (robot body or whole robot having such a robot body) corresponding to the modeled object designed/processed/outputted by the method. The production process may comprise the following steps:

- (*e.g.* automatically) applying the method, thereby obtaining the CAD model or CAE model outputted by the method;
- using the obtained CAD or CAE model for manufacturing the product.

The method may also contain a conversion of a CAE model into a CAD model. Such a conversion may comprise executing the following (*e.g.* fully automatic) conversion process that takes as input a CAE and converts it into a CAD model comprising a feature-tree representing the product. The conversion process includes the following steps (where known fully automatic algorithms exist to implement each of these steps):

- segmenting the CAE model, or an outer surface/skin thereof, thereby obtaining a segmentation of the CAE model into segments, *e.g.* each forming a surface portion of the model;
- detecting geometries of CAD features by processing the segments, *e.g.* including detecting segments or groups of segments each forming a given CAD feature geometry (*e.g.* an extrusion, a revolution, or any canonic primitive), and optionally geometric characteristics thereof (*e.g.* extrusion axis, revolution axis, or profiles);
- parameterizing the detected geometries, *e.g.* based on the geometries and/or on said geometric characteristics thereof;
- fitting CAD operators each to a respective portion of the CAE model, based on a geometry of said portion, for example by aggregating neighboring segments detected as being part of a same feature geometry;
- encoding the geometries and the corresponding CAD operators into a feature tree;
- optionally, executing the feature tree, thereby obtaining a B-rep representation of the product;
- outputting the feature tree and optionally the B-rep, the feature tree and optionally the B-rep forming the CAD model.

Using a CAD model for manufacturing designates any real-world action or series of action that is/are involved in/participate to the manufacturing of the product represented by the CAD model. Using the CAD model for manufacturing may for example comprise the following steps:

- editing the obtained CAD model;
- performing simulation(s) based on the CAD model or on a corresponding CAE model (*e.g.* the CAE model from which the CAD model stems, after a CAE to CAD conversion process), such as simulations for validation of mechanical, use and/or manufacturing properties and/or constraints (*e.g.* structural simulations, thermodynamics simulation, aerodynamic simulations);
- editing the CAD model based on the results of the simulation(s);
- optionally (*i.e.* depending on the manufacturing process used, the production of the mechanical product may or may not comprise this step), (*e.g.* automatically) determining a manufacturing file/CAM file based on the (*e.g.* edited) CAD model, for production/manufacturing of the manufacturing product;
- sending the CAD file and/or the manufacturing file/CAM file to a factory; and/or
- (*e.g.* automatically) producing/manufacturing, based on the determined manufacturing file/CAM file or on the CAD model, the mechanical product originally represented by the model outputted by the method. This may include feeding (*e.g.* automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, *e.g.* upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more bending steps, one or more deep drawing steps, one or more molding steps, one or more machining steps (e.g. milling steps) and/or one or more punching steps. Because the design method improves the design of a model (CAE or CAD) representing the part/product, the manufacturing and its productivity are also improved.

The CAM file may comprise a manufacturing step up model obtained from the CAD model. The manufacturing step up may comprise all data required for manufacturing the mechanical product so that it has a geometry and/or a distribution of material that corresponds to what is captured by the CAD model, possibly up to manufacturing tolerance errors. Determining the production file may comprise applying any CAM (Computer-Aided Manufacturing) or CAD-to-CAM solution for (*e.g.* automatically) determining a production file from the CAD model (*e.g.* any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:

- Fusion 360,
- FreeCAD,
- CATIA,
- SOLIDWORKS,
- The NC Shop Floor programmer of Dassault Systèmes illustrated on https://my.3dexperience.3ds.com/welcome/fr/compass-world/rootroles/nc-shop-floor-programmer,
- The NC Mill-Turn Machine Programmer of Dassault Systèmes illustrated on https://my.3dexperience.3ds.com/welcome/fr/compass-world/rootroles/nc-mill-turn-machine-programmer, and/or
- The Powder Bed Machine Programmer of Dassault Systèmes illustrated on https://my.3dexperience.3ds.com/welcome/fr/compass-world/rootroles/powder-bed-machine-programmer.

The product/part may be an additive manufacturable part, *i.e.* a part to be manufactured by additive manufacturing (*i.e.* 3D printing). In this case, the production process does not comprise the step of determining the CAM file and directly proceeds to the producing/manufacturing step, by directly (*e.g.* and automatically) feeding a 3D printer with the CAD model. 3D printers are configured for, upon being fed with a CAD model representing a mechanical product (*e.g.* and upon launching, by a 3D printer operator, the 3D printing), directly and automatically 3D print the mechanical product in accordance with the CAD model. In other words, the 3D printer receives the CAD model, which is (*e.g.* automatically) fed to it, reads (*e.g.* automatically) the CAD model, and prints (*e.g.* automatically) the part by adding together material, *e.g.* layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, *e.g.* by a user (*e.g.* an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (*e.g.* automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product may alternatively be a machined part (*i.e.* a part manufactured by machining), such as a milled part (*i.e.* a part manufactured by milling). The product may alternatively be a molded part, *i.e.* a part manufactured by molding (*e.g.* injection-molding). In such case the production process may comprise a step of determining the CAM file. This step may be carried out automatically, by any suitable CAM solution to automatically obtain a CAM file from a CAD model of the product The determination of the CAM file may comprise (*e.g.* automatically) checking if the CAD model has any geometric particularity (*e.g.* error or artefact) that may affect the production process and (*e.g.* automatically) correcting such particularities.

In case of machining, further to the check, the determination of the CAM file may comprise (*e.g.* automatically) determining the machining or milling path, *i.e.* the path to be taken by the machining tool to machine the product. The determining of the CAM file thus results in, and outputs, the CAM file comprising a machining path, and optionally the set machine parameters and/or specifications of the configured nesting. This outputted CAM file may be then (*e.g.* directly and automatically) fed to the machining tool and/or the machining tool may then (*e.g.* directly and automatically) be programmed by reading the file, upon which the production process comprises the producing/manufacturing step where the machine performs the machining of the product according to the production file, *e.g.* by directly and automatically executing the production file. The machining process comprises the machining tool cutting a real-world block of material to reproduce the geometry and/or distribution of material captured by the CAD model, *e.g.* up to a tolerance error (*e.g.* tens of microns for milling).

In case of molding, further to check, the determining of the CAM file may then further comprise determining, based on the CAD model, a quantity of liquid material to be used for molding, and/or a time to let the liquid material harden/set inside the mold, and outputting a CAM file comprising these parameters. The production process then comprises (*e.g.* automatically) performing the molding based on the outputted file, where the mold shapes, for the determined hardening time, a liquid material into a shape that corresponds to the geometry and/or distribution of material captured by the CAD model, *e.g.* up to a tolerance error (*e.g.* up to the incorporation of draft angles or to the modification of draft angles, for demolding).

The manufacturing of a robot body represented by the designed 3D robot body model or of a robot having such a robot body is now discussed in more details, by way of examples.

The method may result in a 3D robot body model representing a robot with deformable portions which can be made from many deformable materials and actuated in different ways. The robot body or robot may be manufactured from materials such as silicon, and actuate them by fluid pressure, typically, air pressure. Other actuations, for example cables, may also be used. In particular, a robot designed using the method may use actuating by air pressure, which is also the most common approach. A (virtual) design obtain by the method may be realized in fabrication using the known techniques in art.

A robot made according to a design obtained by the invention may have several distinct areas/portions, deformable and/or rigid, where the deformable areas can be passive or active. The active areas are the areas configured to be actuated, and the passive areas are the areas not to be actuated. In an analogy with the living creatures' anatomy, an active area may be equivalently referred to as "muscle", and a rigid area may be equivalently called "bone" or "skeleton". Each of the passive or active areas may be to some extent deformable or non-deformable, i.e., rigid. The active areas may be activated in different ways. Due to rigidity, the activated rigid areas may only show significantly small deformations. Thereby the method may consider the rigid areas to be passive. The distinct portions with different property may need different and/or independent processes of fabrication and need to be assembled altogether afterward. This can be done according to known methods in the art for the robots with deformable portions that serve different purposes. According to such methods, each portion may be fabricated individually and then assembled to arrive at the desired result. An example is described in "Autonomous Soft Robotic Fish Capable of Escape Maneuvers Using Fluidic Elastomer Actuators" https://www.liebertpub.com/doi/10.1089/soro.2013.0009.

In examples, the method may further comprise manufacturing a robot body or a (whole) robot based on the determined 3D robot body model based on the optimal continuous value of the design variables. The method may manufacture each of the deformable active/passive portions, and/or non-deformable passive/active portions according to a respective manufacturing process and a respective material. The method may then assemble said portions together to manufacture the robot. The manufacturing may be performed automatically or at least partially automatically upon a command received from an operator (e.g., for validation or input of a material type or availability of a material for the manufacturing tool).

Having established that it is possible to assemble the robot from as many elements as desired, now fabrication of each of individual areas of the robot including the muscle control is discussed.

A varying stiffness of passive areas may be produced by known 3D printing techniques that exploit lattice microstructure, for example according to the document Martinez et al., "Procedural Voronoi foams for additive manufacturing", ACM Transactions on Graphics, Volume 35, Issue 4.

The activation tor individual muscle behavior, controlled by fluid pressure, may be individual, thanks to individual air pressure feed by tubes or by individual air pump units. Thereby, an amplitude and timing (e.g., phase shift) of an actuation are thus controllable. Concerning the amount of muscle force and displacement produced for a given air pressure, this can be locally adapted to be a function of the amplitude value that is assigned to each location in the design. To perform this adaptation a method of structure optimization may be used. Thereby, it is feasible to adapt the muscle movement, within reasonable error, to any morphology and behavior that has been generated (i.e., designed) by the method. The topology optimization is capable of moving material inside the muscle, arriving at internal structures that modify the behavior to agree with the prescribed expansions and contractions.

The muscle control strategy may be performed according to many control strategies in the art and are not in any way limited to simple actuation like sine waves actuation. As will be discussed later, the method may perform gradient-based optimization by back chaining through the physics, thereby being able to follow the chain rule through any control strategy back to the parameters that govern the actuation, such that they may be co-optimized with the robot morphology. This forms another advantage relative to the known robot generation methods that do not exploit gradients, as this co-optimization is impossible as well as the control strategy.

As discussed above, the robot body model has one or more deformable portions each made of a deformable material. As known in engineering, deformation refers to the change in size or shape of an object under a force (of a stress thereof). In practice, all materials found in practice are deformable, i.e., deform upon having a force applied. Thereby, a rigid material, i.e., a material that does not deform under a force is hypothetical. In engineering, it is generally considered that rigid materials are the materials with significantly small deformation upon an application of a force (or a stress thereof), e.g. less than 1% in any direction. In other words, a rigid body/object is a solid body in which deformation is zero or so small it can be neglected. The distance between any two given points on a rigid body remains constant in time regardless of external forces or moments exerted on it. The rigidity may be defined according to the stiffness parameter defined by the Young's modulus of each material. For example, in the applications of the method, each material with a Young's modulus higher than a threshold may be considered to be rigid, i.e., non-deformable. The threshold may be dependent on the forces and the stresses the robot body or the robot is supposed to be subject to when put into practice. The threshold may be for example 20 GPa, 50 GPa, or 100 GPa. In general, rigid objects, in particular when being compact and not highly elongated, can be also defined by the maximum percentage elongation (i.e., strain). For example, a rigid portion may not deform by more than 1% in any direction. Furthermore, at least part of the one or more deformable portions is configured to be actuated. By actuation it is meant active deformation of deformable material, e.g. contraction or expansion. An active deformation is deformation under an applied force/stress. The actuation function represents such an active deformation. The force/stress necessary in designing the actuators (as discussed above) can be determined in any manner known. In examples, the active deformable material may be composed of a network of air pockets. The network may be configured such that air can be pumped into the network to create an expansive (dilative) force, or the air can be pumped out to create a contractive (contraction) force. In another examples, the interior of the active deformable material can be fitted with an array of linear actuators (e.g., pneumatic or electric) configured to push or pull against a plurality of elastic walls, thereby producing a dilative or contractive force. A designer may then design the actuators to produce such dilative and/or contractive effects.

By "providing an objective function based on predetermined parameters" it is meant that the method obtains an objective function which is defined using (a set of) predetermined parameters as parameters in the objective function. The objective function is also a continuous function of (a set of) design variables. By "a motion metric" it is meant a measure regarding the motion of the robot. The motion may comprise macroscopic motions, like displacement and or rotation of the robot. In examples, the objective function may at least partially compute the displacement of the center of mass/gravity of the robot during a time period. In such examples, the optimization problem may consist in maximizing the displacement over said time period, i.e., maximizing an average velocity. Such optimized design results in obtaining more efficient robots (e.g., in terms of energy consumption and/or time consumption) under the practical conditions to perform a mission or technical task. Alternatively or additionally, the motion may comprise microscopic motions, like deformation upon an application of a force. In examples, the objective function may at least partially compute a (e.g., maximum) deformation of the robot under an axial force and/or a torsion. The motion metric may be according to applications in which the designed (and manufactured) robot according to the method is supposed to be used. Hence, an objective function may be related to a behavior of interest of the robot in said application. An optimal value of the objective function corresponds to an optimal performance of the robot with respect to said motion metric. By "quantifying a motion metric of the robot" it is meant that the objective function outputs a quantity as a metric of said motion metric, e.g., the displacement(s) in centimeters, or deformation(s) in micrometers.

As discussed above, the predetermined parameters include a plurality of voxels forming a gridding of a 3D space. Such a plurality of voxels provides a discrete space in which a geometry of the robot may be described. In examples, the plurality of voxels may form a cube in the 3D space. The size of the plurality of voxels (e.g., the size of an edge of a cube formed by the voxels) may be large enough to allow designing different robots of a maximum desirable size (depending on the application).

The predetermined parameters further include one or more parameters related to the one or more materials. Such parameters may be hereinafter equivalently called material parameters. Said parameters may be mechanical and/or chemical properties which include one or more of: stiffness (Young's modulus), hardness, toughness, shear modulus, Poisson's ratio, Lamé coefficients, specific mass, etc. By being "related to the one or more materials" it is meant that each of the material parameters may represent a mechanical and/or physical property of the one or more materials. In other words, each of the material parameters may be either equal to a mechanical and/or physical property of one of the one or more materials, or represent a range of admissible values for one of the one or more materials. For example, the material parameters may comprise a minimum and/or a minimum value of stiffness for a deformable and/or non-deformable material. The method may then, upon obtaining the optimal design variables, determine one or more deformable/non-deformable materials for the robot so as to satisfy the respective maximum and/or minimum.

The predetermined parameters further include an actuation function. The actuation function represents an actuation signal actuating deformation of the deformable material over a time period. The actuation signal represents an actuation applied on the robot from one or more actuators or external forces. The actuation function may be defined using one or more parameters. In examples, the actuation function may be a time-dependent function. The actuation function may be a periodic and/or oscillatory function, e.g., sine function defined by a frequency, a phase, and an amplitude parameter. Alternatively, the actuation function may be a summation of such periodic and/or oscillatory functions, for example a summation of sine functions with different phase, frequency and/or amplitude.

The predetermined variables may additionally comprise the time period. The time period may be defined automatically according to the application(s) of the robot, the nature of the applied forces on the robot, and/or be determined by a user. In some examples, the time period may be a time interval in which the behavior of the robot is of interest, for example during a time period of grabbing an object. In some examples, the time period me be a time interval long enough such that a state of the robot reaches a corresponding steadiness. For example, when an arm of a robot reaches its steady velocity or when a structure under external force(s) reaches a steady state of deformation.

As discussed above, in some examples, the actuation function may be a periodic function, i.e., a function which repeats its values at regular cycles defined by a frequency. Employing a periodic actuation function may constitute an improved solution by enabling the robot body to be exposed to a repetitive actuation such that the optimization benefits from the iterations of previous actuation cycles. On the one hand, allowing large number of loading cycles is computationally costly. On the other hand, significantly reducing the number of cycles may provide a robot with a non-satisfactory motion metric (i.e., the optimal values of the design variables do not provide a satisfactory value for the objective function). In examples, the method may set the time period and/or the frequency such that the time period includes sufficiently large number of actuation cycles. In particular examples, the method may keep the period of time to be fixed and set the frequency sufficiently large such that at least six, or at least ten (loading) cycles can fit in the time period.

As discussed above, the method takes the actuation function as predetermined variables. This enables the method to obtain a more efficient optimization strategy as the additional parameters related to the activation function are not required to be determined. Furthermore, this enables the method to set the activation function so as the optimization problem converges faster, i.e., with fewer number of iterations, to an optimal continuous solution. For example, the method may set the activation function to a periodic function as discussed above. On the other hand, periodic functions can be efficiently used to model lots of practical actuators, like linear actuators or in particular air pockets as discussed above. On the other hand, periodic function may be sinusoid and in particular may allow for an optimal behavior of the robot in terms of energy consumption given an achieved power. Periodic functions such as sinusoids are particularly appropriate when objective function is velocity.

The predetermined variables may comprise a plurality of other parameters used in the optimization. For examples, the predetermined variables may include a parameter indicating a limit for the volume fraction of the voxels filled with material, a parameter indication a limit for the actuation energy of the robot, a parameter indicating a minimum Young's modulus attributed to the void, a maximum mass, one or more parameters controlling the gradient-based optimization.

As discussed, the design variables include a distribution of density values over the plurality of voxels, i.e., a density distribution with values defined in each voxel. Each density value continuously and monotonously represents for a voxel a proportion of the voxel filled with material, between void and full. In examples, each density value may represent a volume fraction of the voxel filled with material. In such examples, the density value may be in a range of 0 and 1, where 0 means a void voxel and 1 means a completely full voxel.

The design variables further include a distribution of actuation coefficients over the plurality voxels, i.e., with values defined in each voxel. Each actuation coefficient represents for a voxel a response of material inside the voxel to the actuation signal. The response may be represented by a phase and amplitude of the response. The response may be represented in relation to the actuation signal, i.e., by representing how phase shift exists between the actuation signal and the response and/or how much the response is amplified compared to the actuation signal.

In examples, the actuation signal, at a given voxel, is a function of a respective actuation function at the given voxel, a value of a density at the given voxel, and an activation coefficient at the given voxel. The actuation signal may be a function of a penalized value of the density. Specifically, the activation signal at a given location may be a multiplication of a penalized density, an actuation function, and an activation coefficient.

The method then obtains an optimal continuous value of the design variables by exploring the design variables so as to perform a gradient-based optimization of the objective function. By "exploring the design variables" it is meant evaluating the value of the objective function by setting the design variable to different values in a region (also called admissibility region) so as to perform an optimization of the objective function. By "performing an optimization of the objective function" it is meant obtaining a set of optimal values of the design variables so as to obtain an optimal value for the objective function. The performing an optimization may comprise or be a minimization or maximization of the objective function. Accordingly, the optimal values of the design variables may be the values which minimize or maximize the objective function. The optimization is a gradient-based optimization, i.e., the exploring of the design variables is based on moving from one candidate design variables (i.e., candidate density variables and candidate actuation coefficients) in one optimization iteration to another candidate design variable in the next iteration, using a respective gradient of the objective function. Such a moving from one iteration to another may be a continuous map, for example a continuous linear combination between the candidate design variable at the previous iteration and a weighted gradient. The respective gradient of the objective function may be or comprise a partial derivative of the objective function with respect to said candidate design variable (e.g., at a given voxel). The gradient-based optimization may be according to any known methods.

As discussed above, the obtained optimal design variables are continuous, i.e., can take any value in a continuous range during the optimization. On the other hand, in the output of the optimization, the optimal obtained value is one single value of the continuous range for each of optimal design variables at each voxel. In examples, the optimal density values may be any value between a value for a voxel filled with material, and a value for a voxel void, for example between 0 and 1. In the output of the optimization, the obtained density values may form a set of distinct values, for example at least three distinct values. In other words, at least three distinct values from the continuous range of density values appear among the results of the optimization, i.e. the resulting optimal density values. For example one of the distinct values may represent the void voxels, one may represent the totally filled voxels, and one may represent the partially filled voxels. In examples, at the output of the optimization, the set of all optimal actuation coefficient values obtained may comprise at least four distinct values, one among which representing passive regions and at least two among which representing different phases for active regions. In other words, at least four distinct values from the continuous range of actuation coefficient values appear among the results of the optimization, i.e. the resulting optimal actuation coefficient values.

The method then determines 3D robot body model based on the optimal continuous value of the design variables. In examples, the method may reconstruct a geometry of the robot using any reconstruction method on the plurality of voxels and based on the optimal distribution of the density values (which is proportional to the filling of a voxel).

The performing of a gradient-based optimization may comprise an iterative process. Each iteration of the iterative proves may include simulating the robot based on the predetermined variables thereby obtaining values of simulation variables over the time period. By "simulation variables" it is meant a plurality of variables which describe/define a state of the robot at a plurality of time instants during the time period of simulation. In examples, the simulation variables may be an ensemble of position, velocity, and deformation gradient variables over the time period. Obtaining the values of simulation variables over the time period may further relate to a respective value of (candidate) design variables. The method then may obtain a value of the objective function corresponding to the obtained values of simulation variables over the time period and for the candidate design variables. Thereby, each iteration of the optimizing step may comprise at least one simulation step to evaluate a respective value of the objective function of the candidate design variables of said iteration.

The method may perform the simulating according to any known methods of simulating physics and mechanics. In examples, the simulating may be a meshless - also known as meshfree- method. Using a meshless method is beneficial in particular as the robot is composed of deformable materials. Meshless methods, in contrary to mesh-based methods like finite element methods, do not use meshes on the materials which may subject to large deformation and/or distortions. In such cases, the large deformation/distortion of the material enforces large deformation and/or distortion on the respective mesh attached to it and may result in singularity problems in obtaining the simulations in applications of mesh-bases method for deforming mechanics.

In examples, at each iteration of the gradient-based optimization, the simulating may comprise a material point method (MPM). As known in the field the MPM is a meshless method. The MPM may include defining a plurality of particles (i.e., material points) located with respect to the gridding formed by the plurality of voxels. By "being located with respect to the gridding formed by the plurality of voxels" it is meant that a (global or universal) location of each particle is defined with respect to the gridding. The plurality of particles provides a discretization of a geometry of the robot.

The MPM implementation according to the method may further include assigning, to each particle, a Young's modulus based on the value of the design variables. Said design variables may be in particular a respective distribution of density values. The MPM may assign a Young's modulus so as to penalize the presence of intermediate density values between a full voxel (e.g., of value 1) and a void voxel (e.g., of value 0). In other words, the MPM implementation according to the method may discourage the formation of intermediate densities that have no real physical significance, which leads to sharper morphologies with densities close to 1 or 0. In yet other words, the penalization may modify the relationship between stiffness and density so that intermediate densities exhibit a significant low Young's modulus, thereby enabling the optimization to avoid exploring those values.

In examples, the MPM may assign a Young's modulus of a type:

$$E = (E_{max} - E_{min}) \times \rho^{p_1} + E_{min}, \qquad (1)$$

where $E$ is the assigned Young's modulus, $\rho$ is the density value, $p_1$ is a penalization parameter, $E_{max}$ is a maximal

Young's modulus, and $E_{min}$ is a minimal Young's modulus. In examples, the penalization parameter may be a constant larger then 3, for example, $p_1 = 4$. The maximal Young's modulus may be an upper range, as discussed above regarding the material parameters, related to the Young's modulus of the one or more materials. The minimum Young's modulus may be a small constant for numerical stability. In other words, $E_{min}$ may be a small number to represent a Young's modulus for the void. In examples, $E_{min} = 0.01$.

Furthermore, the MPM may further include assigning, to each particle, a value of mass based on the density values of one or more corresponding voxels. Said corresponding voxels may include a voxel in which the particle resides and/or a group of neighboring voxels of said voxel. For example, the MPM simulation may comprise generating at the beginning a set of particles, with one particle per respective voxel, and the mass assigned to the particle may be based (solely) on the density value of the respective voxel, for example proportion to such density value. In other examples, the density values of one or more corresponding voxels may be a weighted average of density values in the corresponding voxels. The weighted average may comprise a set of weights, each weight being in correspondence to one of the corresponding voxels. The assigned value of mass may be proportional to the weighted average, for example by a constant for the plurality of voxels.

In examples, the plurality of particles may be located with respect to the gridding such that each voxel includes only one particle. In such examples, the MPM may assign a value of the mass proportional to the density value of said respective voxel in which the particle is located. The assigned value of mass may be of the type:

$$m_p = M_{max} \times \rho \qquad (2)$$

where $m_\rho$ is the assigned mass to the particle, $\rho$ is the density value, and $M_{max}$ is a constant among the plurality of voxels representing a maximum mass for the particles. The value of $M_{max}$ may be set to 1.

Alternatively, the assigned value of mass may be of the type:

$$m_p = M_{max} \times min(\rho(1+\gamma\kappa), 1) \qquad (3)$$

where in addition to the notations defined above, $\kappa$ is a stiffening parameter as discussed in detail later. The parameter $\gamma$ is a weighting parameter which may be smaller than 10, for example 7.

Furthermore, the MPM may further include assigning, to each particle, a value of the actuation signal based on the actuation coefficients and the actuation function. In examples, the assigned value of the actuation signal may be proportional to a respective value of actuation coefficient, a respective penalized value of density, and a respective actuation function. The respective value of the density may be obtained as the weighted average of density values discussed above. Similarly, the MPM may obtained a respective value of actuation coefficient using a weighted average, optionally using a same weight as for the density. The MPM may use a penalization on the respective value of the density. This improves the physical sense of the model as, from a modelling standpoint, the actuation signal falls to zero as density tends to zero. Furthermore, such a penalization improves the numerical stability of the by avoiding the obtention of high amplification of the deformation gradient for deformable and light particles. The assigned value of the actuation signal may be of the type:

$$A = (A_{max} \times \alpha \times \rho^{p_2} \times sin(\omega t)). I \qquad (4)$$

where $A$ is the assigned actuation signal, $\rho$ is the density value, $p_2$ is a penalization parameter, $A$ is a constant among the plurality of voxels. The value of $A_{max}$ may be set to a constant smaller than 10, for example smaller than 5. In examples, the method may $A_{max}$ to a value about 5-7 times smaller than the maximum Young's modulus of the deformable portions of the robot, i.e., $E_{max}$ (or $E_{act}$ according to multi-rigidity examples as discussed below).

Furthermore, $sin(\omega t)$ is the time varying (with respect to time $t$) actuation function with a frequency $\omega$. In examples where the time period is 1-1.5 seconds, the method may set the frequency to a value between 1 and 100, for example below 50. In other examples, the sine function may be a general actuation function $f(t)$, for example a linear combination of several sine functions with different frequency, amplitude, or phase shift.

The MPM may further include iterating MPM simulation steps based on the Young's modulus, the value of mass, and the value of the actuation signal assigned to the particles. In examples, at each iteration of simulation step, the MPM determines a mesh/grid corresponding to the plurality of material points. In other words, at an initialization step of the simulation, the MPM may determine said mesh by considering a mesh with respect to the plurality of particles. The MPM may use the determined mesh to obtain a plurality of velocities as known in the field (as discussed later in an implementation as "grid operation" stage). More specifically, the MPM may compute an actuation stress tensor on the determined mesh, e.g., on nodes of the mesh, and based on the design variables and the predetermined parameters. The MPM may then apply the Newton's laws of motion and optionally one or more boundary conditions to obtain said plurality of velocities. The MPM may then compute a displacement of each particle based on the obtained velocities (as discussed later in an implementation as "grid to particles" stage).

As known in the field, the determined mesh of the MPM is where the Newtonian mechanics are calculated to find a new field (i.e., distribution) of position, velocities and deformation gradients. The MPM then transfers back the calculated new fields on the particles using interpolations. Such grid/particles transfers and interpolations can be performed according to any known manner in the art, and it is beyond the scope of the present disclosure.

In examples, the MPM may compute the actuation Cauchy stress tensor, for each particle and with respect to the determined mesh according to the following relation:

$$\sigma_a = \frac{1}{J}\left(\mu(F.F^t) + (\lambda \log(J) - \mu).I + F.A.F^t\right) \qquad (5)$$

where $\sigma_a$ is the stress, $F$ is the deformation gradient, $J$ is the determinant of $F$ and $I$ is an identity matrix. Here $\lambda$. and $\mu$ are the Lamé coefficients being obtained with the assigned Young's modulus and the Poisson's coefficient. As the Poisson's coefficient only slightly varies for different materials, in particular among isotropic continuous materials, the method may consider a constant value for the Poisson's coefficient among the plurality of voxels. For example, the method may set a constant value of Poisson's ration between 0.01 and 0.5, for example between 0.1 and 0.45, or between 0.2 and 0.3, for example 0.25.

In examples, the 3D robot body model may consist of one or more deformable portions each made of a deformable material. In other words, in such examples, the whom robot body is deformable. In such examples, the design variables may consist of the distribution of density values and the distribution of actuation coefficients over the plurality of voxels. In particular, in such examples, the value of mass assigned to each particle (when MPM is used) may be proportional to the density values of one or more corresponding voxels, for example according to equation (2).

In examples, the 3D robot body model may further comprise one or more rigid portions each made of a rigid material. In such examples, the design parameters may further include a distribution of stiffening parameter values over the plurality of voxels. Each stiffening parameter value may continuously and monotonously represent for a voxel a level of stiffness of material filling the voxel, between a first level and second level stiffer than the first level. In examples, the first level may represent a stiffness level for deformable portions and the second level may represent a stiffness level for the rigid portions. The first level may be set to a value of 0 and the second level may be set to a value of 1. In such examples, the optimal stiffening parameter may be a continuous value as discussed above. In other words, the values of the stiffening parameter may be any value between the first level and the second level. As a result, the obtained optimal stiffening parameter values at the output of the optimization may be from a set of at least three distinct values of this continuous range. In other words, there at at lease three distinct values of the range present in the final set of optimized stiffening parameter values. For example one value may represent the totally rigid voxels, one representing the totally deformable voxels, and one representing between these two extremes.

The allowance of one or more rigid portions in the robot body constitutes an improved solution for the performance of the robot. The presence of the rigid portions helps the robot to transit a motion more efficiently and thereby move with less amount of energy consumption, thanks to the interaction of the rigid portions and the deformable portions of the robot. On the other hand, and in the mathematical sense, the presence of rigid portions, decreases the amount of deformable portions (or muscles), and thereby the energy, consumes by the robot in deformations. Furthermore, the method obtains the location and size of such rigid portions automatically and via an optimization procedure rather than being selected by a user's intuition.

Furthermore, and similar to what discussed above, as the method in such examples employs a continuous representation of stiffening parameter for the stiffness of the material. This improves the solution by providing the continuity in the behavior of the objective function with respect to the additional free variable of the optimization problem (i.e. the stiffening parameter), thereby, enabling the method to benefit from gradient-based optimization techniques.

In such examples, the method, in the step of determining a 3D robot body model may apply further processing on the obtained stiffening parameter in order to obtain a respective 3D robot body model. In examples, such processing may comprise applying a thresholding step on the (optimal) stiffening parameters. For example, the method may determine that each voxel with a stiffening parameter higher than an average of the first level and the second level is a rigid voxel.

In particular, in such examples, the value of mass assigned to each particle (when MPM is used) may be dependent on a function of a respective density and a respective stiffening parameter. Such a function may be, for example, according to equation (3).

In such examples, the performing of a gradient-based optimization may comprise an iterative process. Each iteration of the iterative process may include computing a distribution of Young's modulus values over the plurality of voxels based for each voxel on the density value and on the stiffening parameter value. Such a computation of the Young's modulus distribution may be a part of the MPM simulation (e.g., at the initialization of the MPM) for each iteration of the optimization. In such examples, the computation of the Young's modulus value for a voxel is of the type:

$$E = (E_{max} - E_{min}) \times \rho^4 \times ((1 - \varepsilon)\kappa^{\frac{1}{4}} + \varepsilon) + E_{min}, \qquad (6)$$

where $E$ is the computed Young's modulus, $E_{max}$ is the Young's modulus of a rigid material, $E_{min}$ is a minimum Young's modulus, $E_{act}$ is the Young's modulus of the deformable material, $\rho$ is density value, $\kappa$ is a value of stiffening parameter,

and $\varepsilon = \dfrac{E_{act}}{E_{max}}$ .

In examples, the performing of the gradient-based optimization of the objective function may further comprise imposing a constraint on a volume fraction, the volume fraction being computed from a respective distribution of density values. This improves the convergence of the optimization to a viable solution. In particular, imposing the constraint weakly, i.e., not constraining the values of density to a precise value (e.g., like using Lagrange multipliers would amount to, and which the method of the example does not perform), helps the optimization to better explore the solution space. In examples, the method may apply such a weak constraint in form of a re-normalization as discussed below.

In examples, the imposing of a constraint on a volume fraction may of the type, at a given voxel:

$$\rho = \hat{\rho} + \eta \times (\rho_{target} - \hat{\rho}) \qquad (7)$$

where

$$\rho_{target} = V_{frac} \times N_{voxel} \times \frac{\hat{\rho}}{\sum_{voxel} \widehat{\rho_i}} \qquad (8)$$

Here $\eta$ is a parameter, $V_{frac}$ is the volume fraction, $\rho$ is a (constrained) density value, $\hat{\rho}$ is an unconstrained (or raw) density value, $\sum_{voxel} \widehat{\rho_i}$ is a summation of $\widehat{\rho_i}$ on the plurality of voxels, and $N_{voxel}$ is a total number of voxels of the plurality of voxels. Total number of voxels equals total number of particles in example having one particle per voxel.

In such examples, the performing of the gradient-based optimization of the objective function may further comprise imposing a constraint on an actuation energy, the actuation energy being a function of the design variables. This constitutes an improved solution by setting a boundary on the energy consumed by the robot over the time period by taking into amount of actuations and/or deformable portions to be used. On the other hand, such examples provide a more efficient solution to optimize the objective function and the consumed energy than multi objective optimization. Furthermore, imposing the constraint weakly helps the optimization to better explore the solution space as discussed above. In examples, the method may apply such a weak constraint in form of a re-normalization as discussed below.

In examples, the imposing of the constraint on an actuation energy is of the type, at a given voxel,

$$\alpha = \hat{\alpha} + \tanh\left(\frac{\sum_{voxel} |\hat{\alpha}_i| \times \rho_i^4}{\Gamma_{frac} \times N_{voxel}}\right)(\alpha_{target} - \hat{\alpha}) \qquad (9)$$

where

$$\alpha_{target} = \Gamma_{frac} \times N_{voxel} \times \frac{\hat{\alpha}}{\sum_{voxel} |\hat{\alpha}_i| \times \rho_i^4} \qquad (10)$$

wherein $\alpha$ is a constrained actuation coefficient (which simply referred to as an actuation coefficient), $\hat{\alpha}$ is an unconstrained

or raw actuation coefficient, $\sum_{voxel} |\hat{\alpha}_i| \times \rho_i^4$ is a summation of $|\hat{\alpha}_i| \times \rho_i^4$ on the plurality of voxels, $|\hat{\alpha}_i|$ is an absolute value of the raw actuation coefficient at voxel $i$, and $\rho_i^4$ is a (constrained) density value at voxel $i$. Here $\Gamma_{frac}$ is an energy fraction and $N_{voxel}$ is a total number of voxels in the plurality of voxels. Here the energy on the voxels may be defined as $\sum_{voxel} |\hat{\alpha}_i| \times \rho_i^4$. The function tanh in the above equation (9) acts as a soft limit. Such a soft limiter that has little effect when the energy is far below the limit, and becomes stronger as the limit approaches.

In examples, the predetermined variables discussed above may further comprise any of the parameters required for simulating the robot. In particular, the predetermined variables may comprise any of the parameters discussed above regarding the MPM method, for example one or more of the penalization parameter $p_1$, $E_{min}$, $M_{max}$, $\gamma$, $V_{frac}$, $\Gamma_{frac}$.

An initialization step is now discussed.

In examples the optimization may start by initialization of the design variables. For example, the method may initialize the density variables to a respective said volume fraction $V_{frac}$. As discussed above, the method may provide the volume fraction as a predetermined variable. In such examples, the optimization loop can constrain the value strongly as it only needs to move density around while the total remains constant. The energy consumption use is a function of deformable portions, and in examples where the actuation coefficients are ranged between a -1 to 1, the coefficient values are set neutral, i.e., zero at all voxels, as any other initialization value may introduce a bias.

In such examples, the exploring of the design variables may further comprise updating the distribution of values of the design variable based on a previous value and a computed derivative. The updating may comprise a gradient descent update. In other words, the method may update each of the density and actuation coefficients according to a respective gradient, and a respective step size along the gradient. The method may further update the updated values of the density using the updated value of the density (i.e., according to gradient descent) and the constraint on a volume fraction. The method may further update the update values of the actuation using the further updated value of the density and the constraint on an actuation energy.

In examples, the performing of a gradient-based optimization may further comprise computing partial derivatives of the objective function with respect to the design variables. The method may use such computed partial derivatives in updating the values of the design variables (e.g., when using the gradient descent method) as discussed above. The performing of a gradient-based optimization may comprise a local-in-time method for the computing of the partial derivative. Such a local-in-time method constitutes an improved solution for a limitation of robot design by differentiable simulations known as "global-in-time" differentiation. In examples where the optimization proceeds by steepest descent on the partial derivative of the objective function relative to the design variables, said derivatives result from running the simulation (e.g., using MPM) forward in time, and then integrating gradients backwards from the end of the simulation. Such a solving backward in time requires saving all the intermediate states of every time step in the forward simulation. Because of the large number of time steps in the simulation, the amount of saved data is very large and prohibitive regarding the memory footprint. Employing a local-in-time method by makes it possible to simulate and optimize robots with significantly larger number of design variables and thereby more complex, with high level of details, and/or being capable of executing a long mission.

In such examples, the performing of a gradient-based optimization may comprise providing a plurality of time instants between an initial time and an end of the time period, thereby defining a plurality of time intervals each formed between two consequent time instants. The obtaining of values of simulation variables over the time period may thereby comprise obtaining the simulation variable at the plurality of time instants. Furthermore, the simulating of the robot based on the predetermined variables may comprise performing a forward simulation on each time interval, starting from the initial time to the one before the last. Here, the performing of a forward simulation on the time interval may be based on an initial condition (e.g., for the first interval) and/or the forward simulation on a previous time interval. In other words, the method may split a forward simulation into a number of intervals and solve them one after another. The method may then perform a forward simulation and a backward simulation on the last interval based on based on an initial condition and/or the forward simulation on a previous time interval. Then the method may perform a backward simulation (i.e., backward in time) on each time interval, starting from the time interval before the last to the first time interval, based on an initial condition (i.e., for the last interval) and/or the forward simulation on a previous time interval.

In examples, computing the partial derivative of the objective function respective to the design variables may be determined at each time step (i.e., time interval) according to the simulation variables using an equation of the type

$$\frac{\partial L}{\partial \rho} = \sum_{t=T_0}^{T_f} \frac{\partial s_t}{\partial \rho_t} \times \frac{\partial L}{\partial s_t} \qquad (11)$$

where $L$ is the objective function, $\rho$ is the density value, $T_0$ is the initial time instant and $T_f$ is the final time instant of the plurality of time instants (which is the end of time period). Here $s_t$ is the simulation variables at the time instant $t$ and $\rho_t$ is density value at the time instant $t$. Similar relations may be used for computing $\frac{\partial L}{\partial \alpha}$, and $\frac{\partial L}{\partial \kappa}$.

This means that the method may split the simulation into several parts and unroll the chain rule to obtain the gradient for each time step and assemble the gradients. For a split into n sub-parts, the process needs 2$n$ - 1 simulations, i.e., $n$ - 1 forward simulations, one simulation at the last interval, and $n$ - 1 backward simulations.

In such examples, the method does not approximate the intermediate states; instead, the method may reconstruct them by repeating the simulations and using an equation of the type, also called "chain rule"

$$\frac{\partial L}{\partial s_T} = \left( \prod_{t=T}^{T_f - 1} \frac{\partial s_{t+1}}{\partial s_t} \right) \times \frac{\partial L}{\partial s_{Tf}}. \qquad (12)$$

The term $s_t$ is used to simplify the notion of the state of a particle (i.e., position, velocity, deformation gradient) at each time step $t$.

Such a split of the partial derivative in particular possible because the gradient of design variables and actuation are calculated at each time step of simulation from the gradient of the simulation variables (e.g., position, velocity). Furthermore, deformation gradients are calculated from the chain rule back propagation from the objective function.

Using the partial derivatives obtained by the split method, and in examples where the optimization proceeds by steepest descent on the partial derivative of the objective function relative to the design variables, the method may update each of the design variables at each iteration according to equations of the type, at each voxel:

$$\rho \leftarrow \rho + \delta_\rho \times \frac{\partial L}{\partial \rho} \qquad (13)$$

for the density value $\rho$,

$$\alpha \leftarrow \alpha + \delta_\alpha \times \frac{\partial L}{\partial \alpha} \qquad (14)$$

for the actuation coefficient $\alpha$,

$$\kappa \leftarrow \kappa + \delta_\kappa \times \frac{\partial L}{\partial \kappa} \qquad (15)$$

for the stiffening parameter $\kappa$. Here $\delta_\rho$, $\delta_\alpha$, and $\delta_\kappa$ are the step size in for a respective steepest descent method and may be equivalently referred to as learning rate(s) as known in the gradient descent algorithms in the field of machine learning. The method may set an initial value for each step size (e.g., according to an input by a user) and may modify them in the iterations (e.g., in each iteration) of optimization and according to a convergence behavior of the optimization. In examples, the method may set a value of the step sizes as $\delta_\rho$ = 0.02, $\delta_\alpha$ = 0.1, and $\delta_\kappa$ = 0.3. The arrow symbol $\leftarrow$ indicates that an old value of the operant at the left of the operator is updated/replaced by the value at the right.

In examples, the predetermined variables discussed above may further comprise the steps sizes $\delta_\rho$, $\delta_\alpha$, and $\delta_\kappa$.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

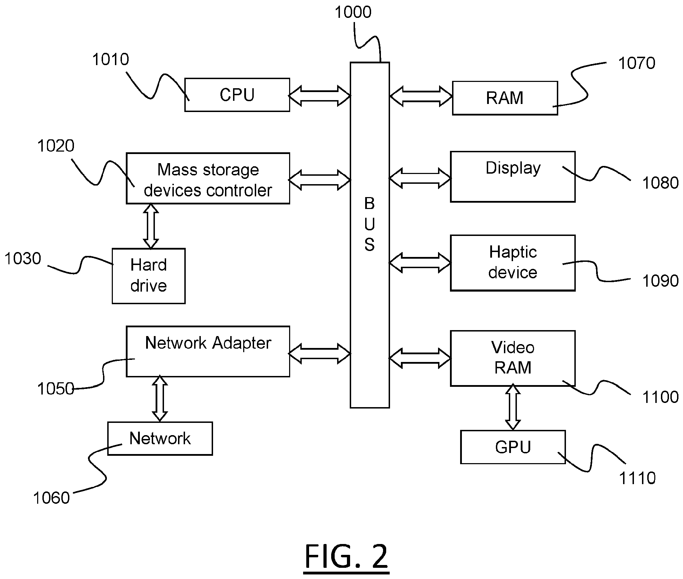

FIG. 2 shows an example of the GUI of the system, wherein the system is a CAD system.

In FIG. 2, the robot body model obtained by the method is presented as the 3D modeled object 2000. The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching, or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

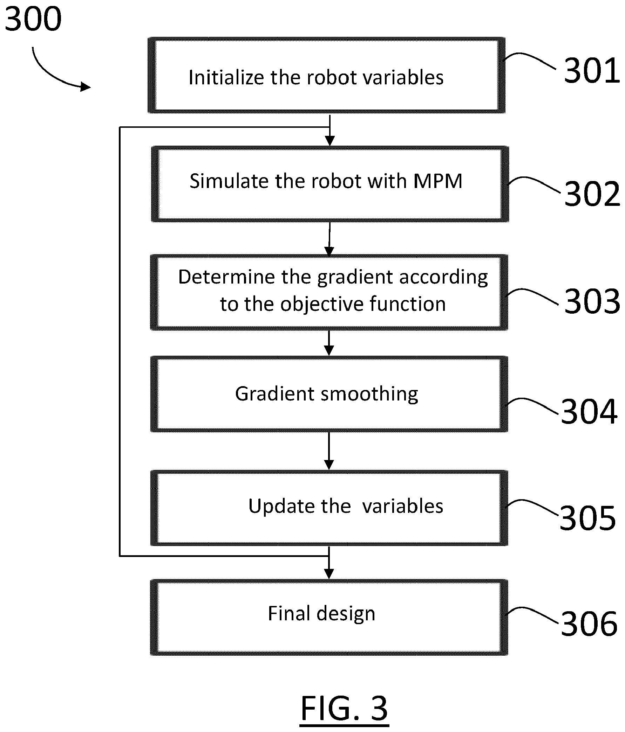

FIG. 3 shows an example of the system, wherein the system is a client computer system, *e.g.* a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

Implementations of the method are now discussed.

The implementations of the method relate to a solution to the technical design problem of, given a neutral initialization volume, typically a cube, with no a priori shape or actuation strategy, generating a soft robot being able to walk or swim. Furthermore, the solution must not be limited in terms of scalability, meaning that the computational requirements and in particular memory footprint remain manageable with respect to the robot complexity and simulation time.

The implementations of the method may belong to the domain of robotics and in particular in robotics using deformable portions. Such a domain deals with any robotic device that interacts closely with humans such as exoskeletons, where at least part of the robot obtains its motion from large-deformation flexibility. In such robots, further joints or articulations may be present. Such robots have found a lot of success in gripper applications for automated product handling in the industry. The company Soft Robotics Inc, for example, supplies the foodservice industry with a gripper called the mGrip, which uses pneumatic flexible jaws to grip and manipulate very soft objects such as steaks, pastries or dough balls. The concept of such flexible robotic grippers is also promising for fruit picking.

Specifically, the implementations of the method introduce a novel robot model with flexible members that allows for efficient calculation of both the morphology and the actuator placement for the realization of a given behavior. The implementations provide a solution with scalability and convergence by reformulating the robot generation problem in terms of continuous variables for both density and actuation. Combining this with a differentiable physics solver allows values of the density and actuation to evolve by gradient descent, exhibiting significantly better performance and scalability of the generative process. The implementations also provide an original and effective solution to the problem of memory use of the known methods which is intrinsic to time-dependent optimization processes with high numbers of variables.

By providing an efficient way to generate virtual robots with deformable portions, the implementations facilitate the design and subsequent construction of physical robots made out of silicon or other flexible materials, and actuated by pneumatic or other fluid-filled chambers.

The implementations are able to significantly reduce the trial and error process of evaluating different physical designs, and therefore drastically reducing development time. This effect is observed already in the automotive world where the introduction of virtual CAD models of mechanical parts and assemblies have contributed to reducing by a factor of two or more the development time of an automobile.

The implementations are able to generate effective robots with deformable portions according to an objective function while avoiding the drawbacks described above, by using a gradient-based method that provides fast convergence and scalability. A particular advantage of relying on gradient descent in high dimensional space is that it is widely used in the training of neural networks, and therefore well studied and efficiently supported by software and hardware. The implementations allow generation of soft robots in which all the constitutive parts, namely muscles (actuators) and more or less rigid passive areas, are free to occupy arbitrary positions and shapes in the design volume in the interest of best performance.

The implementations are to create a virtual 3D robot that can serve as a model for the construction of real world soft robots. The robot in the robotic model is designed so as to automatically configure itself such to develop a certain behavior. For examples, such a behavior may be to travel in a given direction, which may be defined to be along the X-axis.

The following table provides an explanation for each used notation with a range in which they may vary:

| Symbol | Meaning | Range |
|---|---|---|
| $\rho$ | Density variable | ]0,1] |
| $\hat{\rho}$ | Raw density variable | ]0,1] |
| $\alpha$ | Muscle variable/Activation coefficient | [-1,1] |
| $\hat{\alpha}$ | Raw muscle variable/activation coefficient | [-1,1] |
| $E$ | Young's modulus values in one per voxel | $[E_{min},...,E_{act},...E_{max}]$ |
| $\sigma_a$ | Cauchy actuation stress | |
| $L$ | Objective function | |
| $m_\rho$ | Mass of a particle | $]0,M_{max}]$ |
| $A$ | Actuation values/signals | $[-A_{max},A_{max}]$ |
| $s_t$ | Simulation state at time step t | |
| $dt$ | Simulation time step | |
| $t$ | time | $[T_0,T_f]$ |

(continued)

| Symbol | Meaning | Range |
|---|---|---|
| $T_0$ | Initial simulation time | |
| $T_f$ | Final simulation time | |
| $V_{frac}$ | Volume fraction | ]0,1] |
| $\Gamma_{frac}$ | Energy fraction | ]0,1] |
| $\varepsilon$ | (Bone muscle) Young's modulus ratio | ]0,1[ |
| $\lambda, \mu$ | Lamé coefficients | |
| $\eta, \gamma$ | Scalar coefficients | |
| $N_{voxel}$ | Total number of voxels | |
| $N_T$ | number of time step | |
| $\kappa$ | Stiffening parameter/variable | [0,1] |
| $F$ | Deformation gradient | |
| $I$ | Identity matrix | |
| $J$ | Determinant of the deformation Gradient | |

Following the above, a robot according to the implementations is represented by a density field $\rho$ which describes the presence/absence of material, and an actuation field $\alpha$ which represents phases and amplitude of the actuations. Density and actuation may be represented directly as per voxel values. The density field and the actuation field are both defined by real sample values at regular XYZ grid volumetric locations; i.e., on a voxel field with field values (density, actuation) defined at each voxel location.

In a simplified model according to the implementations, the robot is initialized to a base shape that can be for example a cube. The density can change at any location in the space of this shape between 1 (full material) and 0 (empty or no material), resulting in change of shape and connectivity (i.e., topology). The actuation coefficients may change between -1 and 1, where -1 and 1 are opposite actuations (at 180 degrees phase) and the central value 0 stands for passive, non-actuated voxel. In other words, a value of -1 means an active- muscle, a value of 0 means a passive muscle and a value of +1 means an active+ muscle. The active- muscles and active+ muscles have actuation of a phase difference equals to $\pi$, so when one is contracting, the other is expanding.

The phase and amplitude values shift and multiply a base sine wave. In variants where the stiffening parameter is present, said parameter may change between 0 and 1. The goal of the implementations is to find the values of the density and the actuation in this voxel field to produce the most successful robot behavior. Successful behavior can be defined by one or more criteria, such as jumping, lifting an object, or any other task. According to some implementation, the success (i.e., the successful behavior) is the ability to travel as far as possible in a given direction within a certain simulation time.

Referring to FIG. 3, a gradient-based optimization method according to the implementations follows these steps:

Step 301 comprises an initialization of the robot variables. Such an initialization may be an initialization to identical values, or randomized values following a distribution. If the implementation comprises implementing (i.e., imposing) a target volume fraction, i.e., a given proportion of full to empty voxels in the finished robot, then the initialization of the density variable may be set to respective said volume fraction.

Step 302 comprises simulation of the robot with MPM. In the simulation, the robot moves under the actuation for a given number of time steps, and the distance traveled by the center of gravity of the robot is recorded, this distance being the value of the objective function.

In step 303, the gradients of the variables are determined relative to the objective function. In Step 304, the gradient values are smoothed by geometric average with the gradients of neighboring voxels. Such a smoothing helps to prevent high local variations. Step 305 includes updating the variables following a gradient descent strategy.

The loop of iterations of steps 302-305 is repeated until arriving at the final design at step 306. Finalization of the design, i.e., step 306 happens when the first of the following occur: i) the maximum allowed computing time is reached, ii) the design stabilizes, i.e., the design variables (density, actuation) cease to change from one iteration to the next.

As discussed above, the implementations simulate the robot using a Material Point Method simulation (see https://en.wikipedia.org/wiki/Material_point_method). The Material Point Method (MPM) is a meshfree numerical simulation method for continuum materials, including fluids, solids, and multiphase interactions. MPM is a hybrid Eulerian-Lagrangian method suitable to model an object with large deformation. In the Lagrangian view the MPM is represented as a set of particles (with individual properties) and in Eulerian view as a grid of simulation space with a fixed resolution (to solve equations of motion). MPM re-evaluates node connectivity at every timestep, making it robust for large deformation of soft objects, as opposed to finite element methods where large deformation requires very costly remeshing steps to avoid node inversion. In addition, MPM is easily differentiable. Due to these properties, the MPM method is suitable for gradient based optimization.

In particular, the implementations may perform MPM according to the document Hu, et al., "A moving least squares material point method with displacement discontinuity and two-way rigid body coupling.", ACM Transactions on Graphics (TOG) 37.4 (2018): 1-14 which is incorporated herein by reference. The MPM implementation of the cited document is Moving Least Square Material Point Method (MLS-MPM) which is a version of MPM where interpolation functions used to transfer the properties of the particles to the MPM grid are replaced with a quadratic projection kernel which significantly speeds up the algorithms.

MPM is composed of three stages. In the first stage, the so-called "particles to grid" stage, the MPM computes particle stresses with their deformation gradients F. The mass of each grid node is computed by a weighted sum of the closest particles. Furthermore, the nodes' velocities are computed with the same weighting of the particles velocities and stress. In The second stage, i.e., the "grid operation", the external forces are applied on the grid nodes and the boundary conditions are solved to obtain the final nodes' velocities. In the third stage, i.e., "grid to particles", particle's velocities are obtained with the inverse operation of the first stage. Then, the implementations compute new positions of the particles using, e.g., an Euler explicit solver. The three stages are repeated for each time step of the simulation. All these operations are differentiable, and the gradients of each operation are calculated analytically and combined via the chain rule.

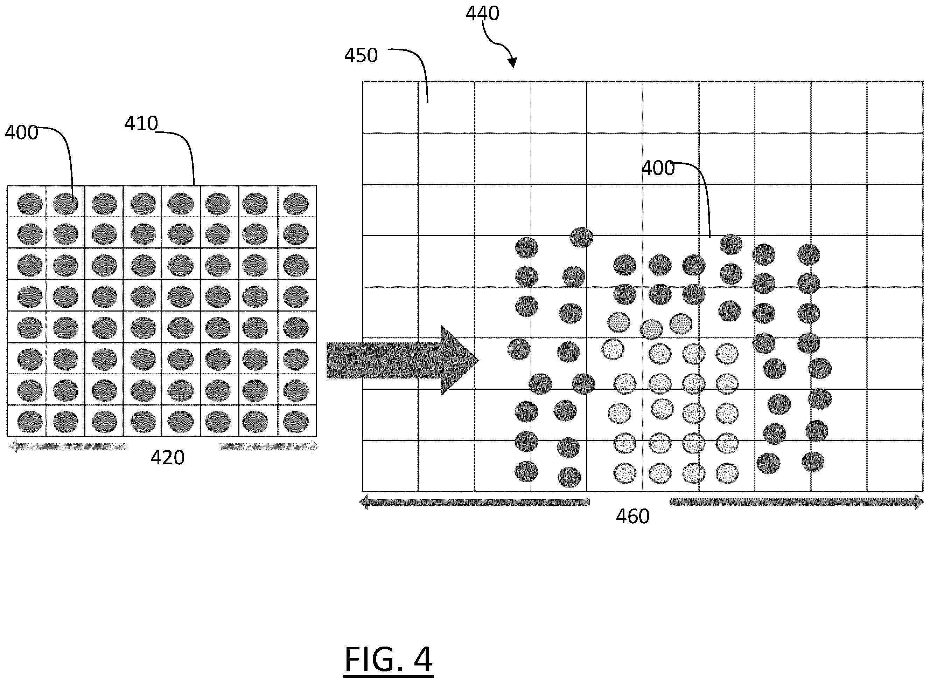

FIG. 4 shows an example of MPM. The model consists of a set 400 (in FIG. 4, left) of particles (i.e., material points) associated to a 3D voxel field 410 modeling density and actuation. A robot of a size 420 is considered in the voxel field 410 by a plurality of particle 400. In the initialization step, the voxel field 410 covers design volume of the soft robot. During the simulation the particles are free to move to any location in the simulation environment 440, but their density and actuation continue to be defined by their initial position in the voxel field 410. The simulation environment 440 is divided into a MPM simulation grid 450 which should not be confused with the voxel field 410. The simulation environment is of the size of 460 which is larger than the robot size 420 (to allow movements of the robot in the simulation environment 440). During the simulation the particles 400 may move freely in the simulation environment 440.

Different levels of greyscale in FIG. 4, may represent a distribution of a design variable (e.g., a density value) over the particles. For example, the darker in the greyscale means that the respective value of the design value is larger. FIG. 4, left shows an initial state in which said design variable is set to a constant value over the plurality of voxels (and thereby particles upon interpolating). For example, the implementations may set the density value at the initial to the volume fraction for all voxels. FIG. 4, right may represent a same set 400 of particles during or after the optimization. Thereby, each particle of the figure in right is in a correspondence to a relative particle of left.

Different encodings of the implementations are now discussed.

The implementations discussed above in which the design variables are presented directly as per voxel values may be equivalently referred to direct encoding.

In contrast, some implementations may determine the design variables, by an implicit model or encoding which uses a lower number of variables, known as neural encoding. Such implementations use a neural network as an implicit function to assign a value at fields according to voxel positions is the 3D space; in this case, the optimization optimizes the weights of the network. However, the principle of the method stays the same.

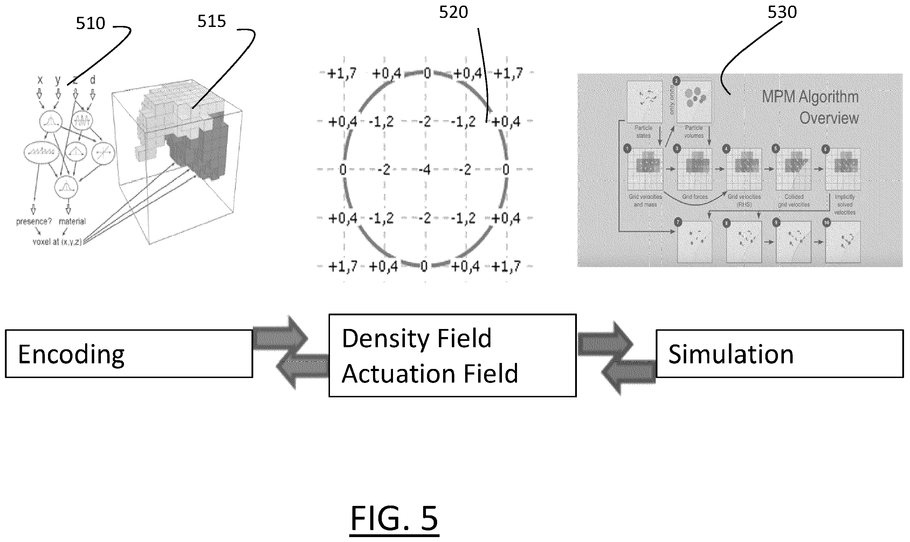

FIG. 5 presents an example of the method using a neural encoding. The encoding using the neural network 510 as the implicit model. The network 510 establishes the connection between the design variables 520 (e.g., the density field or the actuation field) and the input of the network which is the voxel position 515. The method may obtain the optimal values based on the MPM simulation 530 similar to the direct encoding method.

In general, a neural encoding benefits from the fact that the neural network provides a 3D implicit model, which by interpolating between points in the grid (formed by the plurality of voxels) the method can obtain a more detailed robot. On the other hand, a direct encoding is more beneficial in having a more neutral initialization and better numerical stability.

The implementations link the fields and the MPM simulation by considering each particle to be linked to its corresponding voxel of the fields. In this regard, the implementations, use the density field to change the morphology of the robot in the simulation. More specifically, the implementations assign the mass of the particles as the density and penalize the presence of intermediate density values. This approach modifies the relationship between stiffness and density so that intermediate densities exhibit an abnormally low young modulus. As a consequence, the solver avoids using those values. The relationship may be as the following

$$E = (E_{max-} E_{\min})\rho^p + E_{min} \qquad (16)$$

where $E_{max}$ is a maximal Young's modulus, and $E_{min}$ is a minimal Young's modulus. As discussed above, $E_{min}$ may be a small number to represent a Young's modulus for the void. In examples, $E_{min} = 0.01$ and the penalization parameter $p = 4$.

To move the robot, the implementations apply a time varying actuation signal "A" to the deformation gradient where $A = (A_{max} \times \alpha \times \rho^p \times f(t))$. $I$, where $f(t)$ is an actuation function. In order to obtain actuation signal, the implementations multiply the actuation function by a penalized density. Such a penalization improves makes sense from a modelling standpoint that the actuation fall to zero as density tends to zero. In addition, such an actuation improves the numerical stability. The actuation signal may be equivalently referred to as a weighted actuation function. In some implementations, the actuation signal may be composed of actuations functions like sum of sine functions. In these cases $a$ is a vector with one parameter per (sine) function.

The implementations may then obtain the stress (i.e., a Cauchy stress) of a particle as the following

$$\sigma_a = \frac{1}{J}(\mu(F.F^t) + (\lambda \log(J) - \mu).I + F.A.F^t) \qquad (17)$$

where $\sigma_a$ is the stress, $F$ is the deformation gradient, $J$ is the determinant of $F$ and $I$ is an identity matrix. Here $\lambda$. and $\mu$ are the Lamé coefficients being obtained with the Young's modulus and the Poisson's coefficient which equals 0.25.

For the optimization iterations, the implementations may obtain the gradient with respect to each of the design variables using the split and the chain rule discussed in relation to equations (11) and (12). The implementations may smooth said gradients by convoluting them by a Gaussian kernel to remove noisy values.

In some implementations related to a walking soft robot, the actuation function may be set to be a sine function. Such implementations may consider as only external forces the gravitational force and the reaction force of the ground upon contact. The objective function is to maximize the displacement of the center of gravity of the robot.

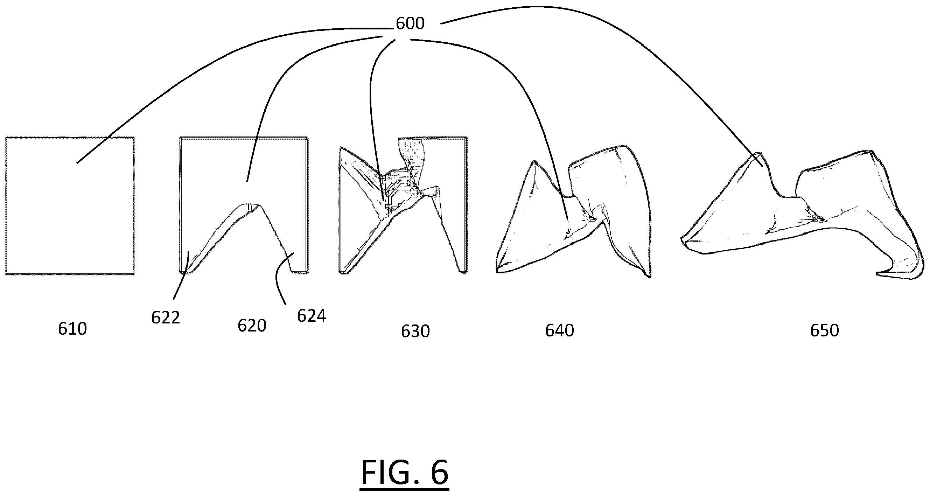

FIG. 6 shows the evolution of a walking robot 600 and the distinctive push off and jump positions in the (locomotion) walk cycle of the finished robot. The step 610 presents the initialized shape of the robot, while step 620 is an intermediate shape at 50 iterations and step 630 presents a final shape after 100 iterations. At seen in FIG. 6, the legs 622 and 624 of the robot have already appeared after fifty iterations. The steps 640 and 650 present the locomotion cycle push off and locomotion cycle jump of the final design of robot 600.

The implementations may change grid operations to, for example, obtain swimming soft robots. To do that, the implementations may remove the gravity and ground reaction forces, assuming the soft robot to be neutrally buoyant, and add a drag force as a function of the surface normals of the robot, said normals being obtained by a Sobel filter on the MPM grid.

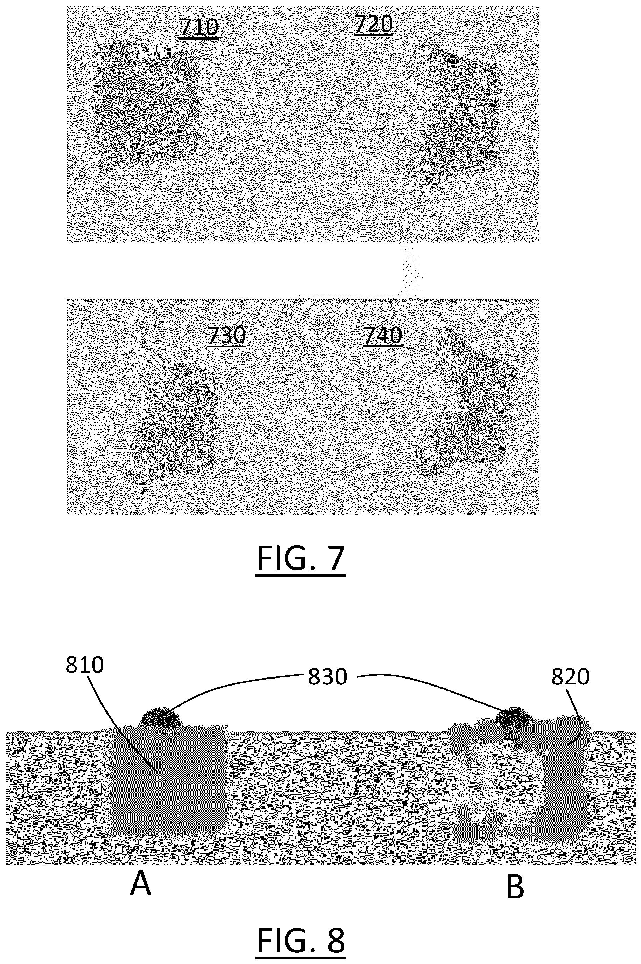

FIG. 7 shows an example of a swimming robot design, after 50 iterations (710), 100 iterations (720), 150 iterations (730) and 600 iterations (740) of the method.

The implementations may also work with a pipeline (like 300 in FIG. 3) with a different objective function. For example, the implementations may consider an objective function as $(\Sigma_t((\ddot{x}_t(p))^6))^{1/6}$ on multiple time steps $t$. In such implementations, the goal is to create a soft damper which minimizes a measure of the acceleration (i.e., $\ddot{x}$) of a specific particle (i.e., $p$), thereby min $(\Sigma_t((\ddot{x}_t(p))^6))^{1/6}$. Such an objective function presents a 6-norm of the acceleration in time for each particle of the robot body. Such a norm is able to efficiently replace an infinity-norm (i.e., a maximum norm) with better behavior in optimizing the objective function. In other words, using such an objective function, the optimizer attempts to lower the peak acceleration value which improves the lower the damage to the damper.

FIG.s 8A-B present a non-optimized passive damper 810 and an optimized example 820. The specific particle is shown as 830.

The implementations directly optimize the density and actuations fields, in other words the implementations performing optimizing of several variables per voxel. Thanks to the scalable behavior of gradient descent in high dimensional spaces, the implementations are able to perform such an optimization efficiently.

An example of a memory management solution is now discussed.

A known limitation of robot generation by differentiable MPM simulation is the use of so-called "global-in-time" differentiation. Optimization proceeds by steepest descent on the gradient of the objective function relative to the design variables. The gradient results from running the simulation forward in time, and then integrating gradients backwards from the end of the simulation.

This backward solving in time requires saving all the intermediate states of every time step in the forward simulation. Because of the large number of time steps in the simulation, the amount of saved data is very large, and this approach is prohibitive in memory footprint.

In order to avoid such a limitation which makes it impossible to generate soft robots with high level of detail, and/or being capable of executing a long mission, the implementations split the simulation, time-wise, into several sub-parts and assemble the gradients. The implementations may split the simulation in four sub-parts, in which case obtaining the gradients will require seven simulations. For a split into n sub-parts, the process is identical, arriving at 2n-1 simulations. This is known as a "local-in-time" approach.

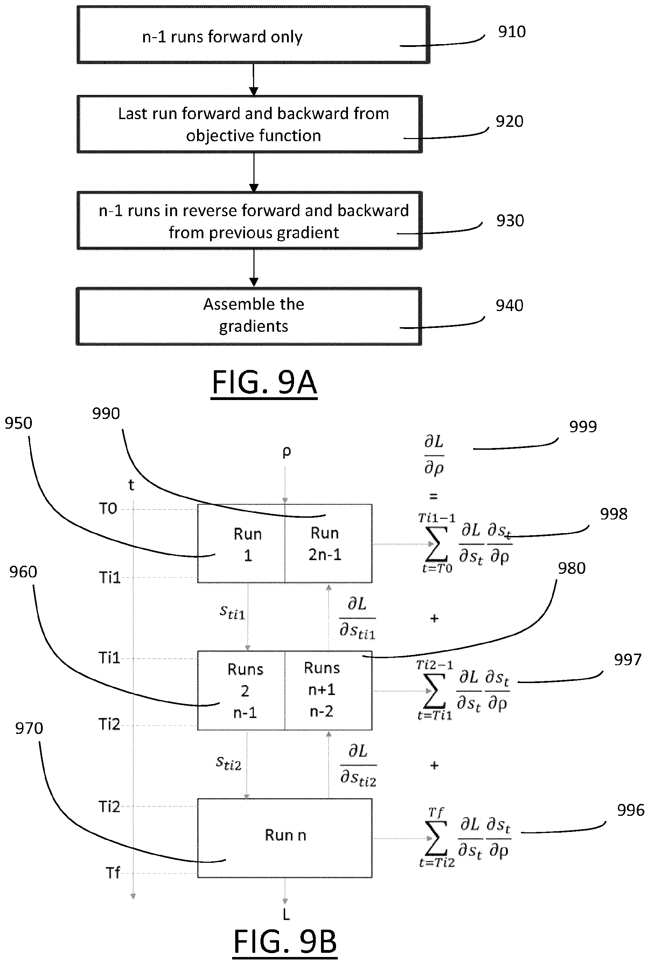

FIG. 9A shows an example of such a local-in-time approach. The process 700 follows these steps, when $n = 4$:

- Step 710: For the first three runs, the implementations only do a forward pass and save the final state of the simulation, each simulation starting with the state loaded from the previous simulation (i.e., the simulation of the previous time step).
- Step 920: In the fourth run (i.e. on the last sub-part), the implementations proceed as for the previous three, in addition to running also a backward (as also called back-propagation) pass from the objective function, through the gradients of the objective function with respect to the simulation variables and the gradients of the simulation variables with respect to the design variables as in equation (11).
- Step 930: the implementations re-execute each of the first three runs in inverse order (i.e., the third, the second, and the first) using the saved simulation values. For inversed order simulation, the implementations (back-)propagate the gradient of the objective function to obtain the gradients of the objective function with respect to the design variables as in equation (11).
- Step 940: the implementations assemble the design variables gradients to obtain the final variables which are equal to gradients of single stage simulation with the same parameters, i.e., the global gradient used in the optimization as equation (11).

With the split, the implementations limit the memory use of the simulation to 1/n. This allows use of a greater number of particles, increasing the resolution of our robots, which in turn allows the soft robot to develop more sophisticated behaviors. The increase in simulation cost is in practice very reasonable given the elimination of the memory footprint barrier.

FIG. 9B presents another example of the local-in-time approach for computing the partial derivative of the objection function to the density variable (i.e., $\frac{\partial L}{\partial \rho}$) with n time steps. Four time instants among the plurality of time instants explicitly showed: $T_0$, $T_{i1}$, $T_{i2}$, and $T_f$ where $T_0$ is the initial time and $T_f$ is the final time. The downward arrows presents forward simulation and the backward arrow presents the backward simulation (or back-propagation). Starting from the initial time $T_0$, Block 950 represents the Run 1 which is the first forward simulation, and Block 960 represents the Runs 3 to n-1 of forward simulations. Block 970 represents the Run n which is a forward and backward simulation. Going backwards from the final time $T_f$, Block 980 represents the Runs n+1 to 2n-2 of backward simulations while the Block 990 represents the Run 2n-1 of the backward simulation. As described above, the partial derivative 999 can be unrolled as a summation of different temporal subparts, i.e., 998, 997, and 996 in FIG. 9B. The sub-part 998 is computed from the Blocks 990 and 950, the sub-part 997 is computed from the Blocks 980 and 960, and the sub-part 996 is computed from the Block 970.

The implementations use the gradients from the differentiable physics solver, and reconstruct the intermediate states by repeating the simulations. The implementations may use, for example, the method described in Document Hu et al. "Difftaichi: Differentiable programming for physical simulation." arXiv preprint arXiv:1910.00935, 2019 which is incorporated herein by reference, for computing the gradients via checkpointing trick explained therein.

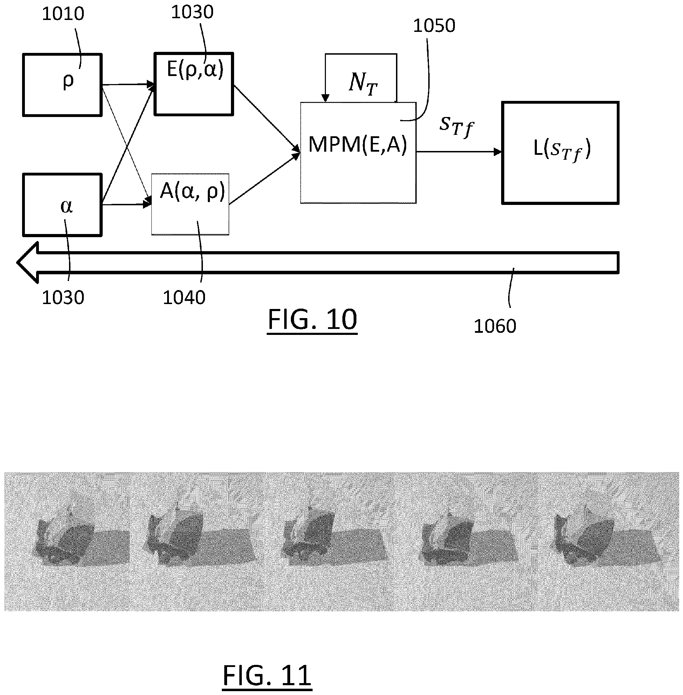

FIG. 10 presents a schematic presentation of the optimization. Each of the Young's modulus 1030 and the activation signal 1040 is computed dependent on the density variable 1010 and the actuation coefficient 1010. The density variable 1010 and the actuation coefficient 1010 are computed using equations (7) to (9), and the Young's modulus 1030 and the activation signal 1040 are computed using equation (1) or (6), and equation (4), respectively. The potential dependency on the stiffening parameter is not presented for the sake of better clarity of the figure.

Then the MPM simulation 1050 may be obtained in $N_T$ time steps based on the design variables 1030 and 1040. The final simulation state $s_{Tf}$ (the value of the simulation variables at time step $T_f$ is provided to the objective function L. The back propagation 1060 using the chain rule as equation (12) and equation (11) completes the optimization to obtain a gradient for the design variables and to update the design variables using equations (13), (14), and (15).

An application to design multi rigidity robots is now discussed.

In a variation, the implementations allow robots to naturally evolve a skeleton. By a skeleton, it is meant that certain areas of the robot might become quasi-rigid, just like the bones of a vertebrate animal or the arm segments of an industrial robot. The combination of muscle tissue with a skeleton allows lever action, and this in turn is a more effective way to implement mobility.

To allow the emergence of skeletal elements which are much stiffer than other tissues, the implementations allow the optimization to consider configurations with very different Young's modulus for active and passive particles. The SIMP equation as discussed above only associates the modulus with the density, which means that a passive and an active particle with the same density have the same Young's modulus. To deal with this limitation and obtain passive particles with higher modulus, the implementations introduce another equation to replace equation (16):

$$E = (E_{max} - E_{min}) \times \rho^4 \times ((1 - \varepsilon)\kappa^{\frac{1}{4}} + \varepsilon) + E_{min}, \qquad (18)$$

where E is the adjusted Young's modulus, $E_{max}$ is the Young's modulus of a rigid material, $E_{min}$ is a minimum Young's modulus, $E_{act}$ is the Young's modulus of the deformable material, $\rho$ is density value, and $\varepsilon = \frac{E_{act}}{E_{max}} < 1$ . The stiffening parameter $\kappa$ is a design variable distributed over the plurality of voxels controlling the stiffening of the robot.

According to equation (18), the stiff portion may also have an actuation signal, but high stiffness leads to a low deformation gradient and a negligible actuation. For $\kappa = 0$, equation (18) has the same behavior as the equation (16), where $E_{act}$ is the $E_{max}$ for the deformable portions of the robot, i.e., as the overall $E_{max}$ if the robot were not multi-rigidity.

Using the equation (18), however, provides multiple solutions for the relationship between mass and Young's modulus $E_{min}$ and $E_{act}$, which may lead to particles with high Young's modulus but low mass which results in poor behavior To overcome this issue, the implementations may use a relationship so as to add an effect of rigidity to the mass according to the following equation in replace of equation (2):

$$m_p = M_{max} \times min(\rho(1 + \gamma\kappa), 1) \qquad (19)$$

where $m_\rho$ is the assigned mass to the particle, $\rho$ is the density value, and $M_{max}$ is a constant among the plurality of voxels. The value of $M_{max}$ may be set to 1. Furthermore, $\kappa$ is a stiffening parameter as discussed in detail later. The parameter $\gamma$ is a weighting parameter which may be smaller than 10, for example 7.

Equation (19) aims to avoid too-light particles by making it such that $m_p = M_{max}$ whenever the density and the rigidity are both significant. This corresponds to the intuition that a stiff area should not have weight lower that would be predicted by its density alone.

In addition to the advantages discussed above, one of the great advantages of using a differentiable physics solver is that a correction such as equation (19) is integrated seamlessly into the chain rule and the gradient-based optimization.

In addition, and in order to avoid the optimizer placing active materials everywhere, the implementations restrict the amount of energy used. Not restricting the energy is unrealistic as a real world robot wants to use the least energy possible. To handle this, the implementations introduce an energy fraction similar to the volume fraction of the topological optimization. Imposing such a fraction encourages the optimizer to use muscle actuation sparingly, seeking mechanical advantage in combination with skeletal structures.

To introduce this formulation, the implementations assume that the energy of the model is related to the actuation coefficients according to $\sum_{voxel}|\hat{\alpha}_i| \times \rho_i^4$ . Then

$$\alpha = \hat{\alpha} + \tanh\left(\frac{\sum_{voxel}|\hat{\alpha}_i| \times \rho_i^4}{\Gamma_{frac} \times N_{voxel}}\right)(\alpha_{target} - \hat{\alpha}) \qquad (20)$$

with $\alpha_{target} = \Gamma_{frac} \times N_{voxel} \times \frac{\hat{\alpha}}{\sum_{voxel}|\hat{\alpha}_i| \times \rho_i^4}$ .

Advantages of this formulation include:

1) It allows emergence of skeletal structures in an automatic way, which is something we have not observed in prior state of the art.
2) It constrains the maximum energy use by the robot without using a multi objective function which can be difficult to balance.

3) It allows a fully passive initialization thanks to the tanh function (smoothed Heaviside model) which ensures a smooth transition from passive to active particle. A fully passive initialization is best for evolutionary emergence of the final robot morphology because it does not assume in advance where the actuations will be.

FIG. 11 presents an example of a locomotion cycle for the robot 1100 with multi-rigidity with skeleton. The muscles (either in dilated or contraction) is presented in dark grey and the skeleton is light grey.

In examples with or without rigid portions, the volume fraction and the energy fraction may not take the whole range of ]0, 1] provided in the table discussed above. In practical examples, the values of the volume fraction may be between 0.4 to 0.8, for example between 0.65 to 0.75. In some examples, lower volume fractions for example below 0.5, for example below 0.4 may be desired in order to design light and efficient robots. A smaller value of the volume fraction, for example smaller than a threshold, for example, smaller than 0.2 or 0.1 may be not useful. In examples, the value of the energy fraction may be a value between 0.2 to 0.6, for example between 0.3 to 0.4, for example 0.25.

*Prototype Implementation*

The prototype implementation directly optimizes the values of density and actuations fields with the MPM gradients. The implementation initializes by setting the field at the target value with clamping in the definition interval.

The prototype implementations may use either a neural encoding or a direct encoding.

According to the neural encoding, the implementation uses a fully connected neural network with two hidden layer to create the encoder. It takes in input the voxel spatial coordinates and outputs the voxel's density and actuation. The first output is the density output where the network uses a sigmoid function to obtain a value between 0 and 1. The network has three outputs for the actuation value fed to a soft argmax function to obtain an actuation function between -1 and 1. To initialize the network, the method pre-trains the network to obtain actuation values of 0 for each voxel and equal to the target volume fraction for the density. The values are given to the MPM simulation, and the weights of the neural networks are optimized with the resulting gradients.

Because the network is an implicit function that will output a density and actuation for any voxel coordinates, it is possible to conduct the simulation and optimization at a lower resolution and subsequently evaluate the network on a higher resolution grid to obtain a finer grain definition of the robot.

According to the direct encoding, the method directly optimizes the values of density and actuations fields with the MPM gradients. The method initializes by setting the field at the target value with clamping in the definition interval. The method applies smoothing by a 3D Gaussian convolution kernel to the gradients in order to limit high frequencies. Without this operation, a full voxel can appear surrounded by empty voxels, which is not realistic.

The implementation includes smoothing by a 3D Gaussian convolution kernel to the gradients in order to limit high frequencies. Without this operation, a full voxel can appear surrounded by empty voxels, which is not realistic.

*1) MPM Implementation*

The prototype implementation employs the MLS-MPM implementation provided in Document Hu et al. "Difftaichi: Differentiable programming for physical simulation." arXiv preprint arXiv:1910.00935, 2019 which is incorporated herein by reference. The prototype implementation applies some modifications to said implementations to obtain variable density and adapting the force and actuations function to the different scenarios of the implementation.

2) The implementations of the cited document (Difftaichi), is originally an extension of Taichi and now integrated in TaichiLang (see Hun et al. "Taichi: A language for high-performance computation on spatially sparse data structures." ACM Transactions on Graphics (TOG) 38, 6 (2019), 201), incorporates automatic differentiation, providing a gradient of an objective function with respect to the space of design variables. This allows gradient-based optimization of the simulated object. TaichiLang is a programming language embedded in Python and designed to process sparse structures. It is particularly aimed at implementing high performance 3D physics and Computer Graphics approaches with parallel computation.

*3) Global-in-time to Local-in-time split.*

The prototype implementation uses $n = 4$, i.e., splitting into 4 pieces. The importance of the split in time has been verified. While, on the consumer-grade PC used for the tests, it has been impossible to obtain the simulation of a 40x40x40 particle robot; with a split said robot has been simulated to learn how to walk.

Memory use is proportional to $t * m^3$ where $t$ is simulation time and m is the number of particles along one axis of the robot design domain. This shows the non-split approach becomes impracticable whatever the hardware provided.

*Gripper scenario*

As discussed above, applications of the method may be employed in designing a flexible gripper which are of important interest in industry. An example of such application is now discussed in reference to FIG.s 8A-B.

An exemplary initial setting of a flexible gripper is presented in FIG. 8A with a gripper 810 and a payload 820. The initial state of gripper 810 is a hollowed out cube with the payload 820 fitting inside. This is just an example. Other initial states are possible.

FIG. 8B presents a schematic view of the gripper 810 and the payload 820, with respect to the ground 840. An external force $F_g$ 850, is considered along the z-axis 845. The payload 820 is to be lifted by the gripper 810 and both are simulated together in MPM. MPM natively accounts for collision/contact between the payload 820 and the gripper 810 (e.g., in the gap zone 805).

Objective function is defined only on the payload 820, and update of density and actuation only on gripper 810. In MPM, the external force 850 applies in positive z direction, and is distributed across top 815 of gripper 810. The goal is to lift the payload 820 upwards, thus the value of the external force 850 should be exceeds the downwards force (due to gravitation, i.e., mass x gravity) of the gripper 810 and the object to be lifted together. In other words, $F_g = -\beta g(M_{pl} + M_{gr})$ where $\beta > 1$ to allow the gripper to accelerate upwards with the payload in its grip. Here $M_{pl}$ is the mass of the payload 820, $M_{gr}$ is the mass of the gripper 810, and $g$ is the gravitational acceleration.

The objective function of the optimization problem is to maximize a Z value of the payload center of gravity (CG) 825. For the Z value a final value of the (lifted) height or an average value may be used. Using an average Z objective has the advantage of creating a reward (gradient) for partial success, as when the payload is lifted but drops out of gripper in the final time steps.

*Experiments and results*

Some experimental results according to the method and using the prototype implementation described above is now discussed.

The standard robot resolution for the experiments is $50 \times 50 \times 50$, with one particle per voxel, results in 125000 particles. This obtains a good balance between time computation and 3D resolution. For all experiments, the objective function to maximize is the distance travelled by the center of gravity of all particles of robot on the x axis. The implementation does not take into account particle density for the center of gravity calculation. The experiments were performed on a Nvidia A6000 GPU. The maximum mass of a particle, $M_{max}$ is equal to 1 in all experiments. For the materials properties, $E_{max} = 25$. For the actuation values, $A_{max} = 4.65$, and a $\omega$ of 40 which guarantees at least 6 actuation cycle. For the optimizer, the implementation uses Adam (according to the document Diederik P. Kingma and Jimmy Ba., "Adam: A Method for Stochastic Optimization." arxiv:1412.6980, 2014 which incorporated herein by reference) with a learning rate of 0.1 for the muscle variables and 0.02 for the density variables.

First case: walking robot

For the walking robot, the implementation simulated a robot with 768 time steps of 0.002, the volume fraction is set to 0.75. The optimization is done for 200 iterations.

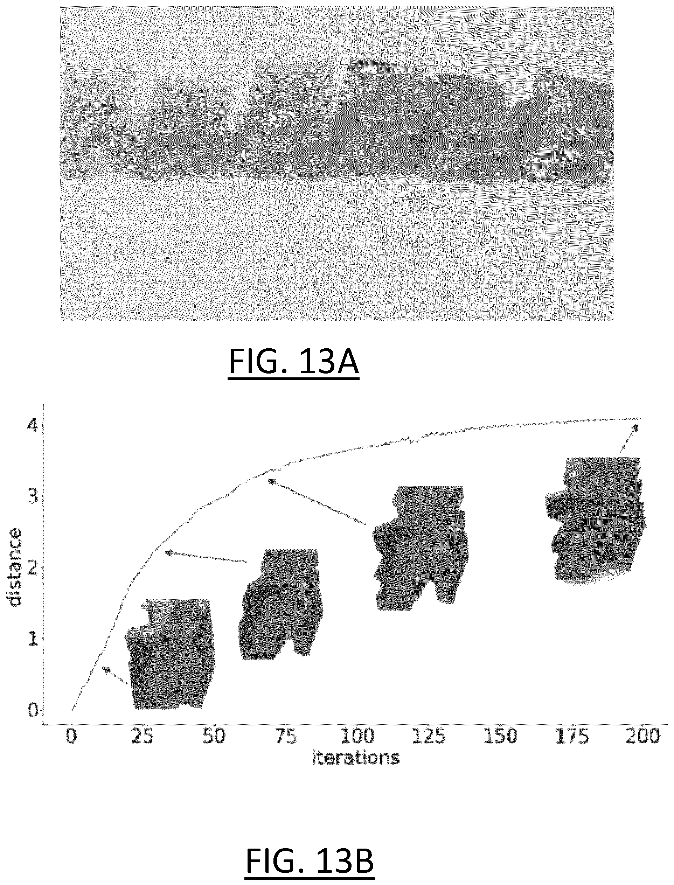

FIG. 13A presents the movement of the optimized robot after said iterations. FIG. 13B presents the evolution of the distance travelled over the optimization with the associated evolution at 15, 45, 75, and 200 iterations. one in distance is the length of a cubic robot. As it can be seen the morphology naturally converged to biped soft robot. In the first iterations, the easiest way to improve the score of the objective function is to fall but the robot naturally built a second leg to walk and improve the objective function. The graph of distance travelled vs. iterations of FIG. 13B is convex which is an indicator of robust convergence.

Second case: Walking up the stair and avoiding obstacles

The robustness of the method is tested in the scenarios of "walking up stair" and "avoiding obstacles". In the stair scenario, the resolution of the MPM grid is $64 \times 64 \times 64$ with $E_{max} = 25$. In the obstacle scenario the resolution of the MPM grid is $100 \times 100 \times 100$ and $E_{max} = 35$. For both of following experiments volume fraction is set to 0.65.

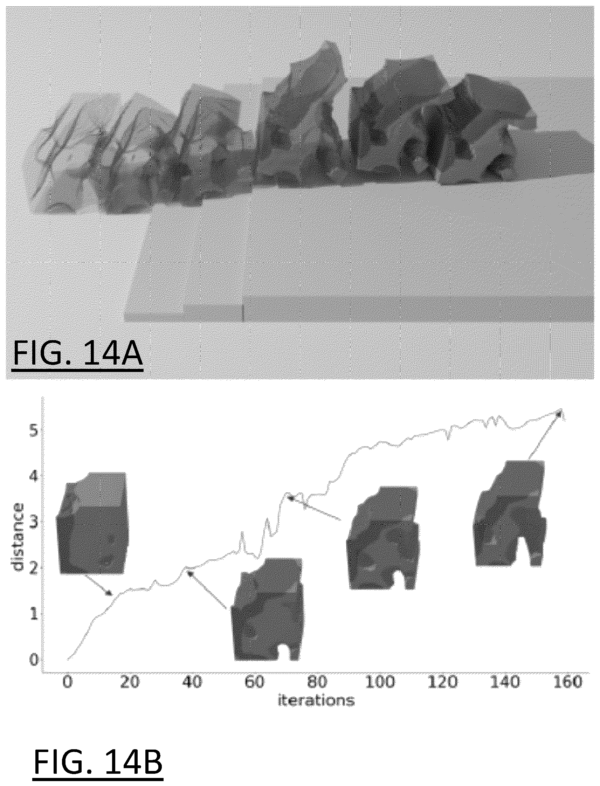

FIG.s 14A-B present the stair scenario and the obtained results. As seen in FIG. 14A, the scenario consists in a stair with two steps where each step has a height of 1/10 of the robot, followed by a flat area. FIG. 14A presents the motion of the optimized robot and the FIG. 14B presents the evolution of the distance travels over the optimization with the associated evolution at iterations number 15, 45, 75, and 150. Here the robot converges to a biped adapted to climb up the stairs and also adapted to walk on the flat. The robot was simulated on 1100 time steps of $1.4 \times 10^{-3}$. (Fig 8)

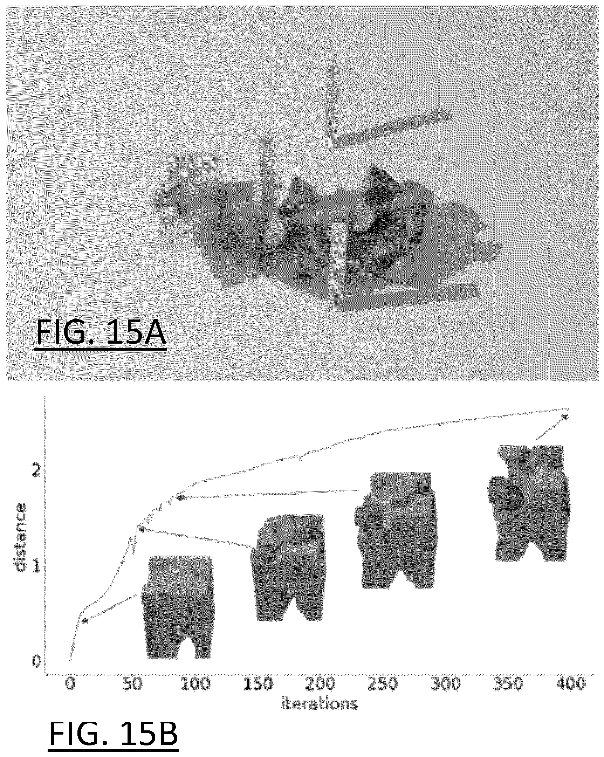

FIG.s 15A-B present the obstacle scenario and the obtained results. As seen in FIG. 15A, the scenario consists in three poles placed in triangle. The robot seeks to find a trajectory that gets around the poles. The optimized morphology is here very different from walking or the stair scenario, both non symmetric and using inertial effects from flapping appendages. The robot was simulated on 1100 time steps of $1.1 \times 10^{-3}$. FIG. 15A presents the motion of the optimized robot and the FIG. 15B presents the evolution of the distance travels over the optimization with the associated evolution at iterations number 10, 45, 90, and 400.

Third case: High-resolution robot

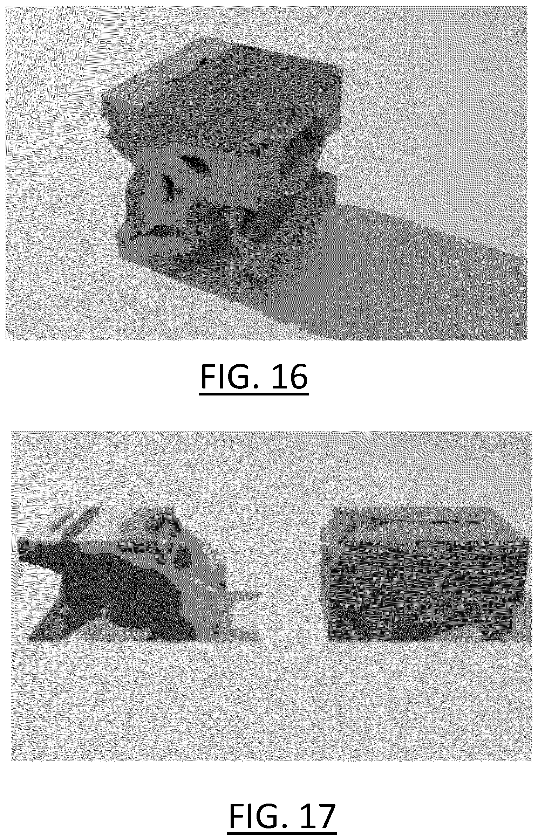

In this case, and thanks to the memory management (via split discussed above) an optimization of a robot on a voxel grid with resolution of $100 \times 100 \times 100$ and two million variables is discussed. This is four orders of magnitude more than what genetic algorithms can handle. The same parameters as in the "walking" scenario have been used with only 512 time steps. FIG. 16 presents the results. This experiment also illustrates the stability of the implementation with respect to resolution, as the result is similar to lower resolution results optimized under the same conditions and with same parameters.

Fourth case: Multi-rigidity robot

In this case, with addition of the stiffening parameter (i.e., rigidity variable=, the initialization shape is set to a $70 \times 35 \times 50$. The parameter $\gamma$ is set to 7. A completely soft robot with the same parameters is also simulated for comparison. The MPM uses explicit time step integration, and with the high Young's modulus used in multi-rigidity robot, the time step is reduced so as to avoid numerical instability. With our soft robot we used a time step of $2 \times 10^{-3}$ and a $E_{max}$ of 25. In the multi rigidity case we set $E_{max}$ to 1500, and we are limited to a time step of $4 \times 10^{-4}$ increasing the computation time required.

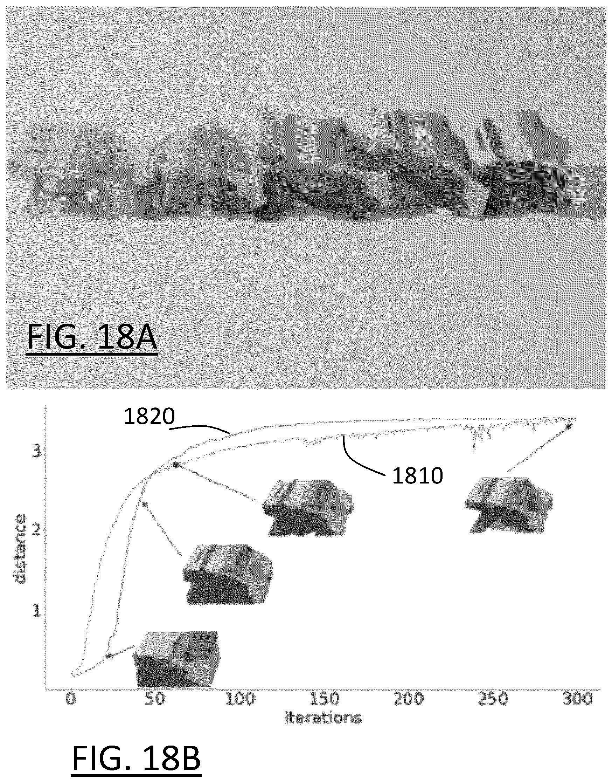

The results are presented in FIG.s 17, and 18A-B. FIG. 17 (left) presents the optimized multi-rigidity robot, where being lighter in the greyscale represents the stiffer material with $Emax$ to 1500. FIG. 17 (right) presents the optimized soft robot with the same parameters. FIG. 18 (top) presents the motion of the optimized multi-rigidity robot, and FIG. 18(bottom) presents the evolution of the distance travelled over the optimization with the associated evolution at 15, 50, 75, and 300 iterations. The curves 1810 and 1820 presents the soft robot and the multi-rigidity robot, respectively.

As seen in these figures, the distance travelled for both robots are the same but the multi rigidity robot uses far less muscle for the same results and has a radically different morphology. The learning rate, i.e., an initial learning rate, of the stiffens parameter $\kappa$, i.e., $\delta_\kappa$ in equation (15), is 0.3 in this experiment. The resulting robot uses its exoskeleton to transmit motion.

Fifth case: Energy limitation

In this experiment, the same parameters as the walking robot are used with only 512 time steps simulation.

The energy used by the robot is computed by the formula $\sum_{voxel} |\alpha_i| \times \rho_i^4$.

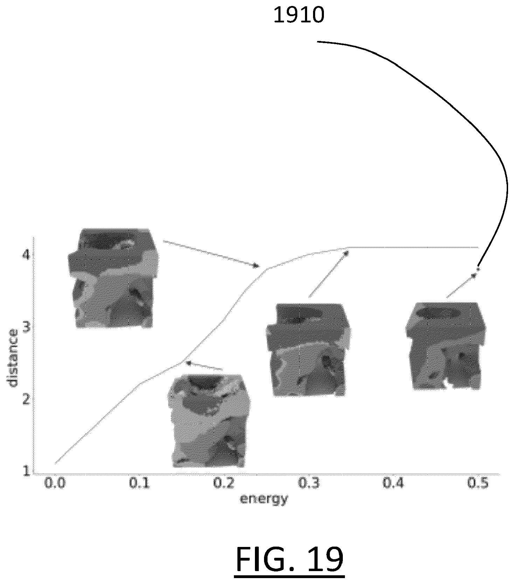

The result is presented in FIG. 19 which present an evolution of distance travelled by the robot. The dot 1910 is the distance travelled by a robot with energy constraint. The lighter portions of the robot in the greyscale are the stiff portions. As seen in FIG. 19, the resulting morphology is surprisingly similar to the robot without the energy limitation. For cases with $\Gamma_{frac}$ above of 0.25 the distance travelled by the robot with the energy limitation is higher than the unconstrained robot, which means that the unconstrained robot was suboptimal. It would appear that the constraint encourages a better gradient descent, avoiding local minima. Indeed, optimizing with different values of the energy fraction amounts to exploring the set of pareto-efficient solutions that maximize distance travelled while minimizing energy use.

**Claims**

1. A computer-implemented method for designing a 3D robot body model, the 3D robot body model representing a robot body formed in one or more materials, the robot body having one or more deformable portions each made of a deformable material, at least part of the one or more deformable portions being configured to be actuated, the method comprising:

   - providing an objective function based on predetermined parameters, the objective function being a continuous function of design variables, the objective function quantifying a motion metric of the robot, an optimal value of the objective function corresponding to an optimal performance of the robot with respect to the motion metric, where:

     o the predetermined parameters include:

- a plurality of voxels forming a gridding of a 3D space,
- one or more parameters related to the one or more materials, and
- an actuation function (f(t)), which represents an actuation signal (A), the actuation signal actuating deformation of the deformable material over a time period,

     o the design variables including:

- a distribution of density values over the plurality of voxels, each density value continuously and monotonously representing for a voxel a proportion of the voxel filled with material, between void and full, and
- a distribution of actuation coefficients ($\alpha$) over the plurality voxels, each actuation coefficient representing for a voxel a response of material inside the voxel to the actuation signal;

    - exploring the design variables so as to perform a gradient-based optimization of the objective function, thereby obtaining an optimal continuous value of the design variables; and
    - determining a 3D robot body model based on the optimal continuous value of the design variables.

2. The method of claim 1, wherein the robot body further comprises one or more rigid portions each made of a rigid material, the design parameters further including

    - a distribution of stiffening parameter ($\kappa$) values over the plurality of voxels, each stiffening parameter value continuously and monotonously representing for a voxel a level of stiffness of material filling the voxel, between a first level and second level stiffer than the first level.

3. The method of claim 2, wherein the performing of a gradient-based optimization comprises an iterative process, each iteration including computing a distribution of Young's modulus values over the plurality of voxels based for each voxel on the density value and on the stiffening parameter value.

4. The method of claim 3, wherein the computation of the Young's modulus value for a voxel is of the type:

$$E = (E_{max} - E_{min}) \times \rho^4 \times ((1 - \varepsilon)\kappa^{\frac{1}{4}} + \varepsilon) + E_{min},$$

where E is the computed Young's modulus, $E_{max}$ is the Young's modulus of a rigid material, $E_{min}$ is a minimum Young's modulus, $E_{act}$ is the Young's modulus of the deformable material, $\rho$ is density value, $\kappa$ is a value of stiffening parameter, and $\varepsilon = \dfrac{E_{act}}{E_{max}}$ .

5. The method of claim 1, wherein the robot body consists of one or more deformable portions each made of a deformable material, the design variables consisting of the distribution of density values and the distribution of actuation coefficients over the plurality of voxels.

6. The method of claim 5, wherein the value of mass assigned to each particle is proportional to the density values of one or more corresponding voxels.

7. The method of any of claims 1 to 6, wherein the performing of the gradient-based optimization of the objective function further comprises imposing a constraint on a volume fraction, the volume fraction being computed from a respective distribution of density values, wherein optionally the imposing of a constraint on a volume fraction is of the type, at a given voxel:

$$\rho = \hat{\rho} + \eta \times \left(\rho_{target} - \hat{\rho}\right)$$

where

$$\rho_{target} = V_{frac} \times N_{voxel} \times \frac{\hat{\rho}}{\sum_{voxel}\widehat{\rho_\iota}}$$

wherein $\eta$ is a parameter, $V_{frac}$ is the volume fraction, $\rho$ is a constrained density value, $\hat{\rho}$ is an unconstrained density value, $\sum_{voxel}\widehat{\rho_\iota}$ is a summation of $\widehat{\rho_\iota}$ on the plurality voxels, and $N_{voxel}$ is a total number of voxels in the plurality of voxels.

8. The method of any of claims 2 to 4, wherein the performing of the gradient-based optimization of the objective function further comprises imposing a constraint on an actuation energy, the actuation energy being a function of the design variables, wherein optionally the imposing of the constraint on an actuation energy is of the type, at a given voxel,

$$\alpha = \hat{\alpha} + \tanh\left(\frac{\sum_{voxel}|\hat{\alpha}_i| \times \rho_i^4}{\Gamma_{frac} \times N_{voxel}}\right)(\alpha_{target} - \hat{\alpha})$$

where

$$\alpha_{target} = \Gamma_{frac} \times N_{voxel} \times \frac{\hat{\alpha}}{\sum_{voxel}|\hat{\alpha}_i| \times \rho_i^4}$$

wherein $\hat{\alpha}$ is a constrained actuation coefficient, $\hat{\alpha}$ is an unconstrained actuation coefficient, $\sum_{voxel}|\hat{\alpha}| \times \rho_i^4$ is a summation of $|\hat{\alpha}_i| \times \rho_i^4$ on the plurality of voxels, $|\hat{\alpha}_i|$ is an absolute value of the unconstrained actuation coefficient at voxel $i$, and $\rho_i$ is a density value at voxel $i$, $\Gamma_{frac}$ is an energy fraction and $N_{voxel}$ is a total number of voxels the plurality of voxels.

9. The method of claim 8, wherein the exploring of the design variables further comprises:

   - updating the distribution of values of the design variables based on a previous value and a computed derivative;
   - further updating the updated values of the density using the updated value of the density and the constraint on a volume fraction; and
   - further updating the updated values of the actuation coefficient using the further updated values of the density and the constraint on an actuation energy.

10. The method of any of claims 1 to 9, wherein the performing of a gradient-based optimization comprises an iterative process, each iteration including simulating the robot based on the predetermined variables thereby obtaining values of simulation variables over the time period, the simulating being optionally a meshless method.

11. The method of claim 10, wherein, at each iteration of the gradient-based optimization, the simulating comprises a material point method (MPM), the MPM including:

   - defining a plurality of particles located with respect to the gridding formed by the plurality of voxels;
   - assigning to each particle:

      -- a Young's modulus based on the value of the design variables,

-- a value of mass based on the density values of one or more corresponding voxels, and
-- a value of the actuation signal based on the actuation coefficients and the actuation function, and

- iterating MPM simulation steps based on the Young's modulus, the value of mass, and the value of the actuation signal assigned to the particles.

12. The method of any of claims 1 to 11, wherein the performing of a gradient-based optimization further comprises computing partial derivatives of the objective function with respect to the design variables, the performing of a gradient-based optimization comprises:

- providing a plurality of time instants between an initial time and an end of the time period, thereby defining a plurality of time intervals each formed between two consequent time instants, the obtaining of values of simulation variables over the time period thereby comprises obtaining the simulation variable at the plurality of time instants;
- performing a forward simulation on each time interval, starting from the initial time to the one before the last, the performing of a forward simulation on the time interval being based on an initial condition and/or the forward simulation on a previous time interval;
- performing a forward simulation and a backward simulation on the last interval based on based on an initial condition and/or the forward simulation on a previous time interval; and
- performing a backward simulation on each time interval, starting from the time interval before the last to the first time interval, based on an initial condition and/or the forward simulation on a previous time interval.

13. The method of any of claims 1 to 12, wherein the determining of the 3D robot body model based on the optimal continuous value of the design variables comprises thresholding the optimal value of one or more of the design variables over the plurality of voxels.

14. A computer program comprising instructions for performing the method according to any one of claims 1 to 13.

15. A system comprising a processor coupled to a memory, the memory having recorded thereon the computer program of claim 14.

FIG. 1

**FIG. 2**

300

| Initialize the robot variables | 301 |

| Simulate the robot with MPM | 302 |

| Determine the gradient according to the objective function | 303 |

| Gradient smoothing | 304 |

| Update the variables | 305 |

| Final design | 306 |

FIG. 3

FIG. 4

FIG. 5

600

610
622
620
624
630
640
650

FIG. 6

710    720

730    740

FIG. 7

810    830    820

A    B

FIG. 8

**FIG. 9A**

$$\frac{\partial L}{\partial \rho}$$

$$=$$

$$\sum_{t=T0}^{Ti1-1} \frac{\partial L}{\partial s_t} \frac{\partial s_t}{\partial \rho}$$

$$+$$

$$\sum_{t=Ti1}^{Ti2-1} \frac{\partial L}{\partial s_t} \frac{\partial s_t}{\partial \rho}$$

$$+$$

$$\sum_{t=Ti2}^{Tf} \frac{\partial L}{\partial s_t} \frac{\partial s_t}{\partial \rho}$$

**FIG. 9B**

**FIG. 10**

**FIG. 11**

1210

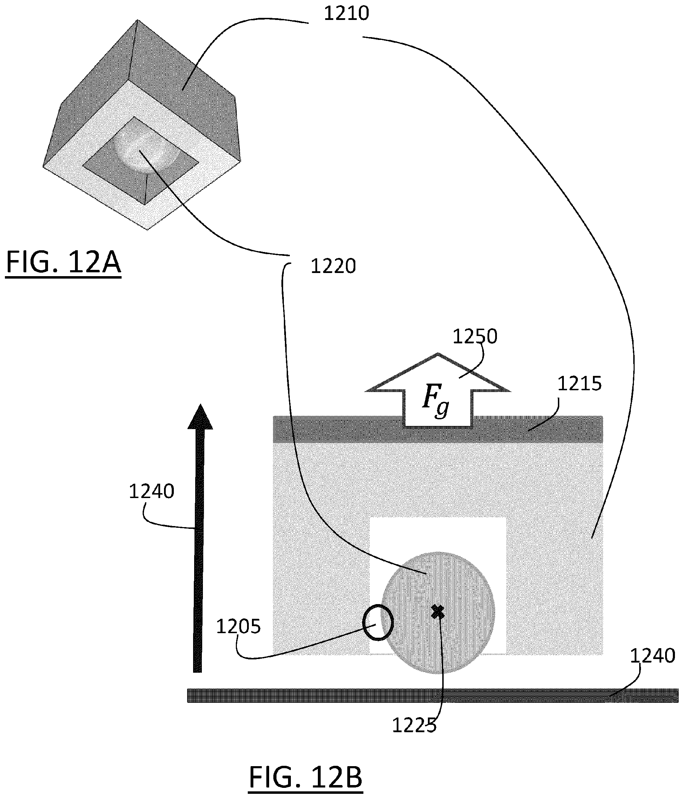

FIG. 12A

1220

1250

$F_g$

1215

1240

1205

1240

1225

FIG. 12B

FIG. 13A

FIG. 13B

FIG. 14A

FIG. 14B

FIG. 15A

FIG. 15B

FIG. 16

FIG. 17

FIG. 18A

FIG. 18B

## FIG. 19

# EUROPEAN SEARCH REPORT

**Application Number**

EP 23 30 5186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NICK CHENEY ET AL: "Unshackling evolution", GENETIC AND EVOLUTIONARY COMPUTATION, ACM, 2 PENN PLAZA, SUITE 701 NEW YORK NY 10121-0701 USA, 6 July 2013 (2013-07-06), pages 167-174, XP058042623, DOI: 10.1145/2463372.2463404 ISBN: 978-1-4503-1963-8 * abstract; figures 1,5-7,12,13,15 * | 1-15 | INV. G06F30/17 G06F30/27 ADD. G06F111/06 |
| A | CHENEY NICK ET AL: "Topological evolution for embodied cellular automata", THEORETICAL COMPUTER SCIENCE, ELSEVIER, AMSTERDAM, NL, vol. 633, 11 June 2015 (2015-06-11), pages 19-27, XP029551239, ISSN: 0304-3975, DOI: 10.1016/J.TCS.2015.06.024 * abstract; figures 2,4,5 * | 1-15 | |
| A | CHANGYOUNG YUHN ET AL: "4D topology optimization: Integrated optimization of the structure and movement of self-actuating soft bodies", ARXIV.ORG, CORNELL UNIVERSITY LIBRARY, 201 OLIN LIBRARY CORNELL UNIVERSITY ITHACA, NY 14853, 2 February 2023 (2023-02-02), XP091427519, * abstract; figures 2,18,19 * | 1-15 | **TECHNICAL FIELDS SEARCHED (IPC)** G06F |

-/--

The present search report has been drawn up for all claims

| Place of search | Date of completion of the search | Examiner |
|---|---|---|
| Berlin | 25 May 2023 | Kirsten, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 23 30 5186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GU YUEQIN ET AL: "Research on Motion Evolution of Soft Robot Based on VoxCAD", 2 August 2019 (2019-08-02), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 26 – 37, XP047515929, ISBN: 978-3-319-10403-4 [retrieved on 2019-08-02] * abstract; figures 2,4-6,8, * | 1-15 | |
| A | NICK CHENEY ET AL: "Scalable Co-Optimization of Morphology and Control in Embodied Machines", ARXIV.ORG, CORNELL UNIVERSITY LIBRARY, 201 OLIN LIBRARY CORNELL UNIVERSITY ITHACA, NY 14853, 19 June 2017 (2017-06-19), XP080771026, DOI: 10.1098/RSIF.2017.0937 * abstract; figures 4,5,8-11 * | 1-15 | |

TECHNICAL FIELDS
SEARCHED (IPC)

The present search report has been drawn up for all claims

| Place of search | Date of completion of the search | Examiner |
|---|---|---|
| Berlin | 25 May 2023 | Kirsten, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3327593 A

**Non-patent literature cited in the description**

- **CHENEY et al.** Unshackling evolution: evolving soft robots with multiple materials and powerful generative encoding. *GECCO,* 2013
- **MARTINEZ et al.** Procedural Voronoi foams for additive manufacturing. *ACM Transactions on Graphics,* vol. 35 (4
- **HU et al.** A moving least squares material point method with displacement discontinuity and two-way rigid body coupling. *ACM Transactions on Graphics (TOG),* 2018, vol. 37 (4), 1-14
- **HU et al.** Difftaichi: Differentiable programming for physical simulation. *arXiv preprint arXiv:1910.00935,* 2019
- **HUN et al.** Taichi: A language for high-performance computation on spatially sparse data structures. *ACM Transactions on Graphics (TOG),* 2019, vol. 38 (6), 201
- **DIEDERIK P. KINGMA ; JIMMY BA.** Adam: A Method for Stochastic Optimization. *arxiv:1412.6980,* 2014